(19)

Europäisches
Patentamt
European
Patent Office
Office européen
des brevets

(11) **EP 1 867 952 B1**

(12) **EUROPEAN PATENT SPECIFICATION**

(45) Date of publication and mention
of the grant of the patent:
**09.12.2009 Bulletin 2009/50**

(51) Int Cl.:
**G01C 21/34** *(2006.01)*

(21) Application number: **06012160.5**

(22) Date of filing: **13.06.2006**

(54) **Optimum route determination employing an estimation function**

Bestimmung einer optimalen Route mittels einer Schätzungsfunktion

Détérmination d'un itinéraire optimal employant une fonction d'estimation

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**19.12.2007 Bulletin 2007/51**

(73) Proprietor: **Harman Becker Automotive Systems
GmbH
76307 Karlsbad (DE)**

(72) Inventors:
• **Nagel, Philipp Harald
21220 Seevetal (DE)**

• **Vorländer, Peter
20535 Hamburg (DE)**

(74) Representative: **Bertsch, Florian Oliver et al
Kraus & Weisert
Patent- und Rechtsanwälte
Thomas-Wimmer-Ring 15
80539 München (DE)**

(56) References cited:
**US-A- 4 984 168        US-A- 6 016 485
US-A1- 2002 100 009**

**Description**

The present invention relates to optimum route determination, in particular to a method and system for determining an optimum route in a road network, based on an estimation function. The method and system of the present invention may be advantageously employed for any optimum route search, in particular for searching optimum routes in a road network, e.g. in a navigation system onboard a vehicle.

Finding an optimum route from a given starting point to a given destination is one of the key features of car navigation systems or other systems providing optimum route information.

Several standard algorithms for finding an optimum route are known in the art, the most famous of which are Dijkstra's algorithm and the A*-algorithm. Throughout this specification, the term "optimum route" is used for a least-cost route, the costs of a route being determined by the sum of costs of road segments traversed when travelling on said route plus the sum of costs associated with junctions or road segment vertices. Several different cost models are frequently employed in navigation systems, e.g., a shortest-route model in which the costs of a road segment are given by the length of the road segment, or a fastest-route model in which the costs of a road segment are given by the length of the road segment divided by a characteristic travel speed on the road segment. Further, cost models frequently take into account user preferences, such as avoiding highways, avoiding tunnels, or avoiding ferry connections.

In Dijkstra's algorithm, the road network, or more generally, a graph is explored starting from the starting point of the route by edge relaxation, the different vertices of the road network being visited in order of minimum costs associated with a route connecting the vertex and the starting point. When the destination is expanded, an optimum route from the starting point to the destination has been found, and Dijkstra's algorithm terminates.

The A$^*$-algorithm is a modification of Dijkstra's algorithm, which employs an estimation function for all vertices of the road network. The estimation function for a given vertex provides an estimate for costs associated with an optimum route connecting the given vertex and the destination. In route search, different paths are ranked according to a priority which is given by the sum of the costs accrued from the starting point to the vertex so far, and the estimation function of the vertex. If the estimation function is such that it never overestimates costs of an optimum route connecting a vertex and the destination, the A*-algorithm is known to find a correct solution to the optimum path problem.

For optimum route search on a road network, a heuristic estimation is frequently employed which is determined based on an air-line distance of a vertex and the destination in shortest-route search, and an air-line distance divided by a characteristic travel speed in fastest-route search. Typically, the better the estimation function, the smaller the number of road segment vertices that has to be visited for determining the optimum route and the shorter the algorithm run time.

However, estimation functions based on an air-line distance are frequently imprecise. Further, in navigation systems on board a vehicle, memory and run time restrictions need to be addressed. Because of the latter restrictions, it is often not feasible to directly apply Dijkstra's algorithm and the A*-algorithm to a road network such as the one of a European country or the US because of the large number of road segments and road segment vertices in these road networks. For these reasons, Dijkstra's algorithm or the A*-algorithm is often modified for use in a navigation system, e.g., by providing a classification of different road segments into different layers or by providing additional information characterizing a road network geometry, which is determined offline and facilitates optimum route search in the navigation system.

In this context, WO 03/079155 discloses a least-cost routing system, in which a reach metric is provided which quantifies the relevance of a road segment for long distance travel. This reach metric has the advantage of being based on map geometry only. However, there is the disadvantage of the reach metric being highly non-local in the sense that the reach of a given road segment may strongly depend on the costs associated with a different road segment which is far away. For example, an increase in cost factor of a road segment may give rise to an increase or a decrease of the reach of a different road segment, even if it is far away. Therefore, the method and system disclosed in WO 03/079155 is not well adapted to partial map updates and dynamical route determination.

US-A-6 016 485 discloses a system for determining a path in a network that decreases the number of disk accesses required in the pathfinding computation. The network is divided into a set of tiles. Sub-paths are pre-computed and are grouped into webs. When finding a path, several pathfinding explorations are performed, in which the webs are utilized.

Therefore, there exists a need in the art for an improved method and system for determining an optimum route. More particularly, there exists a need in the art for a method and system for determining an optimum route which allows partial map updates to be easily implemented, which is suitable for dynamical route determination, and which allows an optimum route to be reliably determined.

According to the present invention, this need is addressed by a method for determining a route on a road network according to claim 1, a method for pre-processing road network data according to claim 24, and a system for determining a route according to claim 27. The dependent claims define preferred or advantageous embodiments of the present invention.

According to an aspect of the present invention, a method for determining a route from a starting point to a destination on a road network is provided, which employs an estimation function for a plurality of vertices of the road network, which estimation function provides a lower bound for costs associated with any route connecting a vertex of the road network and the destination. The method comprises the steps of defining a tiling covering an area wherein at least a portion of the road network is contained, providing a resistance value of each tile of the tiling, and determining an estimation function value for a tile boundary vertex located on a tile boundary in dependence on the resistance values of tiles of the tiling. The resistance values are numerical values which are defined such that, for a given tile, the resistance value represents costs associated with routes connecting vertices of the road network located on a boundary of the given tile, so that a lower bound for costs associated with routes connecting vertices located on the boundary of the given tile may be derived using the resistance value of the given tile. Several advantages are associated with subdividing a map into tiles and with the provision of a resistance value of each tile. Firstly, an estimation function can be reliably and readily computed from the resistance value upon performing the method, e.g., in a navigation system. Further, since the resistance value is a local parameter which is determined by the portion of the road network which is located within the tile only, partial map updates may be easily performed by correspondingly updating the resistance value of the affected tiles. Further, dynamic route determination may be easily implemented. Still further, since the resistance value is typically only a single numerical value, little storage capacity is required for storing the resistance value.

Preferably, the resistance value is defined such that, for the given tile, the resistance value is a lower bound of the costs associated with an optimum route connecting a pair of vertices located on the boundary of the given tile relative to an air-line distance of the pair of vertices, wherein the route traverses the given tile. Further preferably, the resistance value is defined such that, for the given tile, the resistance value is the minimum of or a lower bound on the costs associated with an optimum route connecting any pair of vertices located on the boundary of the given tile divided by the air-line distance of the pair of vertices. Then, for any pair of test vertices located on the boundary of the given tile, the product of the resistance value of the given tile and an air-line distance of the pair of test vertices provides a lower bound of costs associated with an optimum route connecting the pair of test vertices within the tile. Therefore, the resistance value, when combined with properties of road network geometry only, allows one to establish a lower bound for costs associated with arbitrary routes traversing a tile. These lower bounds may be advantageously employed for computing the estimation function for vertices of the road network.

Preferably, the step of determining the estimation function value for the tile boundary vertex comprises the steps of determining a destination tile containing the destination and determining a first lower bound for costs associated with an optimum route connecting a destination tile boundary vertex located on a boundary of the destination tile and the tile boundary vertex for which the estimation function value is to be computed. In particular, the first lower bound may be determined in dependence on the resistance value of a tile or in dependence on the resistance values of a plurality of tiles of the tiling. More particularly, the first lower bound may be determined using Dijkstra's algorithm for a sub-graph of the road network comprising vertices located on tile boundaries only, wherein costs associated with an edge of the sub-graph connecting the first and second vertices located on a boundary of an arbitrary tile is determined from a resistance value of the arbitrary tile and an air-line distance of the first and second vertices. In particular, the costs associated with the sub-graph edge may be set equal to the resistance value of the arbitrary tile multiplied by the air-line distance of the first and second vertices. In this way, for each vertex located on the boundary of the destination tile, a lower bound may be computed for an optimum route connecting this destination tile boundary vertex and the tile boundary vertex for which the estimation function is to be computed. Importantly, the associated optimum route search does not need to be carried out on the graph corresponding to the original road network, but is only performed on a sub-graph consisting of vertices located on tile boundaries only, thus greatly reducing computational complexity of this step. In a preferred embodiment, a lower bound is not established for each destination tile vertex in a separate algorithm, but all destination tile boundary vertices are simultaneously fed into Dijkstra's algorithm as starting points. If, for all destination tile boundary vertices, the lower bound on costs associated with an optimum route connecting the destination tile boundary vertices and the tile boundary vertex is established, this lower bound also provides a lower bound on the costs associated with an optimum route connecting the tile boundary vertex and the destination and may therefore be used as an estimation function value for the tile boundary vertex.

However, the accuracy of the estimation function may be further increased. For this purpose, the step of determining the estimation function value for the tile boundary vertex preferably further comprises the steps of determining a second lower bound for costs associated with an optimum route connecting the destination and the destination tile boundary vertex and adding the first lower bound and the second lower bound. By determining a minimum of this sum of first lower bound and second lower bound over all destination tile boundary vertices, an improved estimation function value is obtained for the tile boundary vertex.

In a particularly preferred embodiment, the estimation function value for the tile boundary vertex is determined by first performing Dijkstra's algorithm on the destination tile only, starting from the destination, in order to determine the costs for optimum routes from the destination to each one of the destination tile boundary vertices, which costs are then input into a further Dijkstra's algorithm that is performed on the sub-graph comprising vertices located on tile boundaries only, wherein costs associated with edges of the sub-graph are, again, determined based on tile resistance values and vertex air-line distances, as described above.

In another preferred embodiment, the estimation function value for the tile boundary vertex is determined by performing Dijkstra's algorithm, starting from the destination, on a re-defined graph that comprises the road segments located in the destination tile and, for tiles other than the destination tile, vertices located on tile boundaries only, costs associated with an edge connecting two vertices located on the boundary of an arbitrary tile being determined based on the resistance value of the arbitrary tile and an air-line distance of the vertices.

Preferably, the estimation function value is determined for each tile boundary vertex of the road network using the method described above. Alternatively, the determination of the estimation function value for tile boundary vertices may be terminated according to any suitable termination criteria. Once the estimation function value has been determined for all vertices located on tile boundaries, based on this information, estimation function values for vertices located inside of tiles may also be easily established. In one embodiment of the present invention, the method comprises a step of determining an estimation function value for an interior vertex located inside of a tile from an estimation function value for a tile boundary vertex located on the boundary of the tile and a lower bound for costs associated with an optimum route connecting the interior vertex and the tile boundary vertex. The latter lower bound may be determined using, e.g., Dijkstra's algorithm. Alternatively, a simpler estimate may be employed, e.g., based on an air-line distance of the interior vertex and the tile boundary vertex or based on a minimum air-line distance of the interior vertex from an edge of the tile on which the tile boundary vertex is located. In this way, an accurate estimation function value may be readily determined for each vertex located in the inside of a tile. If the estimation function values are known for all vertices of the road network or, at least, for all vertices located in tiles that are relevant to the route determination, the standard A*-algorithm may subsequently be performed for determining the optimum route.

Since resistance values defined as indicated above are monotonous functions of the costs associated with road segments located in the corresponding tile in the sense that, if costs of road segments are increased, the resistance value of the tile containing the road segments either remains constant or also increases, the method according to the present invention may be easily adapted to dynamic route determination. For this purpose, the method may comprise the steps of detecting an increase in a cost factor of a road segment of the road network and increasing a resistance value of a tile containing the road segment in dependence on the detected increase in cost factor. In particular, the resistance value may be increased multiplicatively. Alternatively, the resistance value may be left unchanged even when costs of a road segment are increased. The increasing of the resistance value of the tile containing the road segment for which the cost factor is changed, is carried out prior to determining the estimation function values for the vertices of the road network. The costs of a road segment may be increased in various ways, e.g., in dependence on a user input specifying user preferences such as avoiding tunnels, avoiding ferry connections, toll roads, or avoiding highways. Alternatively or additionally, a traffic message signal may be received, and costs of a road segment or of road segments may be increased in dependence on the received traffic message signal. For example, if a traffic jam is announced for a specific road segment, the costs of this road segment may be increased such as to implement an avoiding function.

In one embodiment of the present invention, a tile size of tiles of the tiling is constant. However, in another embodiment, the tiling is defined such that a tile size of tiles increases with increasing distance from the starting point and the destination. In this case, a first resistance value is provided for each tile of a first regular tiling, a second resistance value is provided for each tile of a second regular tiling, and the tiling covering the area containing a portion of the road network comprises both tiles of the first regular tiling and tiles of the second regular tiling, wherein the resistance values of the tiles of the tiling are chosen to correspond to the first and second resistance values, respectively. By appropriately choosing the tile sizes of tiles of the tiling, the method may be made even more efficient. While, in a preferred embodiment, all tiles have square shape, the present invention is not restricted thereto.

Rather, tiles of the tiling may be defined such as to have arbitrary shapes, and not all tiles of the tiling need to have the same shape.

While, in the above, the method according to the present invention has been described such that, for each tile of the tiling, only one resistance value is provided, a plurality of resistance values may also be provided for a single tile. In particular, for each tile of the tiling, a first basis resistance value and a second basis resistance value are provided which, respectively, represent first and second basis cost models. Then, for a cost model formed as a linear combination of the first and second basis cost models, a lower bound on the resistance value is determined by linear combination of the first and second basis resistance values. For example, the first and second cost models may be shortest route and fastest route. Since it is possible to determine tile resistance values of combined cost models from the resistance values of the underlying basis cost models, rather than providing resistance values for a large number of different cost models, it is sufficient to provide resistance values for a smaller number of basis cost models only.

In another embodiment, a plurality of resistance values is provided for each tile, wherein for a given tile each one of the plurality of resistance values characterizes costs associated with optimum routes traversing the given tile in a specific direction, e.g., from an upper edge to a lower edge, from a left edge to a right edge, and, possibly, additional edge combinations. An estimation function determined based on the plurality of resistance values for each tile of the tiling will typically be even more accurate.

Based on the estimation function determined as described for any one embodiment of the present invention above, in the method according to the present invention, an optimum route search from the starting point to the destination is carried out. The algorithm may be any algorithm which employs an estimation function, but is preferably an A\*-algorithm.

While the present invention has been described in terms of a road network above, it may be applied to any arbitrary graph with equal facility.

According to another aspect of the present invention, a method for pre-processing road network data is provided, which method comprises the steps of defining a tiling covering an area wherein at least a portion of the road network is contained; for a tile of the tiling, determining vertices located on a boundary of the tile; determining a lower bound for costs associated with an optimum route connecting any pair of vertices located on the boundary of the tile divided by an air-line distance of the pair of vertices; and outputting the determined lower bound. In particular, the lower bound may be set equal to a minimum of the costs associated with a route connecting an arbitrary pair of vertices located on the boundary of the tile divided by the air-line distance of the pair of vertices. The lower bound thus determined provides a resistance value which may be employed in a method for determining an optimum route according to the present invention.

According to another aspect of the present invention, a system for determining a route from a starting point to a destination in a road network is provided, which system employs an estimation function for a plurality of vertices of the road network, the estimation function providing a lower bound for costs associated with routes connecting a vertex of the road network and the destination, wherein the system comprises a first storage unit containing road network data, a second storage unit containing tiling definition data defining a tiling and a resistance value for each tile, and a processing unit determining an estimation function value for a tile boundary vertex located on a tile boundary in dependence on the resistance values of the tiles of the tiling. Again, the resistance value of a given tile contained in the second storage unit represents costs associated with routes connecting vertices of the road network located on the boundary of the given tile, so that a lower bound for costs associated with the routes connecting vertices located on the boundary of the given tile may be derived by the processing unit from the resistance value of the given tile. A system having this configuration is adapted to perform the method for determining the route according to the present invention and to thus harness the advantages associated therewith.

In particular, in the system, a processing unit may determine a destination tile vertex located on a boundary of a destination tile containing the destination and may compute a lower bound for costs associated with an optimum route connecting the tile boundary vertex and the destination tile boundary vertex, which lower bound is determined in dependence on the resistance values of the tiles of the tiling. In particular, the processing unit may be adapted to employ Dijkstra's algorithm having the destination tile boundary vertex or, simultaneously, all destination tile vertices as origin in order to determine the lower bound. As explained in detail above, in this way, an estimation function value may be readily determined for the tile boundary vertex. Rather than employing Dijkstra's algorithm, the estimation function may also be determined using an A\*-algorithm starting from the destination tile boundary vertices and estimating costs to the starting point of the route search to be performed by an air-line distance. In order to ensure that estimation function values are determined for all relevant tiles, the A\*-algorithm is continued for a predetermined time even after the starting point is expanded. If estimation function values are required at a later stage, during optimum route search, these can be computed 'on demand'. In a preferred embodiment, the system further comprises a memory unit storing coordinates of a tile vertex and the associated estimation function value determined by the processing unit. In an advantageous embodiment, coordinates of the tile boundary vertex may be stored in the form of a one-dimensional coordinate specifying a position of a tile boundary vertex along a line defined by the boundary of the corresponding tile.

Further, the processing unit may receive a traffic message signal for a road segment of the road network and may change the resistance value of a tile containing the road segment in dependence on the received traffic message signal. Alternatively, the resistance value of the respective tile may remain unaltered.

The system further preferably determines an optimum route from the starting point to the destination employing an A\*-algorithm which uses the estimation function values determined in dependence on the resistance values of tiles of the tiling and stored in the memory unit.

In the system for determining the route according to the present invention, the first and second storage units may be a single physical device or may be separate devices. For example, the first and second storage units may be a CD, a DVD, a memory card, or an internal hard disc of a navigation system.

According to yet another aspect of the present invention, a navigation system is provided, comprising input means for inputting a destination, output means for outputting a determined route and the system for determining a route according to any one aspect or embodiment of the present invention, the system being coupled to the input means for receiving the destination therefrom and to the output means for outputting a determined route thereto. The navigation system may further comprise any components customarily employed in navigation systems, such as a position determining means for determining a current vehicle position, which may, e.g., comprise a GPS-receiver, the position determining means being coupled to the system for determining a route for providing the current vehicle position as a starting point for route determination, or a TMC-receiver coupled to the processing unit for providing a traffic message signal thereto.

Again, it should be noted that, although the term "road network" will be used throughout this document in order to explain the present invention, the application of the present invention is not limited to physical road networks. Rather, the present invention may be applied to any network for which an optimum route search may be of interest. Examples include ferry connections, data connections in a computer network or power transmission lines.

Further, it should also be noted that, although the present invention will be described with reference to a road network defined on a plane on which a plurality of tiles is defined, the present invention is not limited to graphs defined on a plane. Rather, the principles of the present invention are equally applicable for higher dimensional objects, e.g., three-dimensional graphs.

It is anticipated that the main filed of application of the present invention will be the determination of optimum routes in a road network, in particular in a navigation system onboard a vehicle.

Brief Description of the Drawings

Additional features and advantages of the present invention will become more readily appreciated from the following detailed description of preferred or advantageous embodiments with reference to the accompanying drawings, wherein:

Fig. 1 shows a schematic block diagram of a system for determining a route according to an embodiment of the invention;

Fig. 2 shows a portion of a road network and serves to illustrate a determination of a resistance value according to an embodiment of the present invention;

Fig. 3 shows a road network and corresponding tiling and serves to illustrate a method for determining an estimation function for a vertex located on a tile boundary, according to an embodiment of the present invention;

Figs. 4 and 5 show a portion of the road network of Fig. 3 and serve to illustrate a method for determining an estimation function for an interior vertex of a tile, according to embodiments of the present invention;

Fig. 6 shows a flow chart representing a method for determining a route according to an embodiment of the invention;

Fig. 7 shows a flow chart representing a sub-routine of the method represented by Fig. 6;

Fig. 8 shows a flow chart representing yet another sub-routine of the method represented by Fig. 6;

Fig. 9 shows a flow chart representing still another sub-routine of the method represented by Fig. 6;

Fig. 10 shows a flow chart representing a sub-routine for the method represented by Fig. 6 according to an alternative embodiment of the present invention;

Fig. 11 shows the road network and tiling of Fig. 3 and serves to illustrate the method according to the alternative embodiment represented by Fig. 10;

Fig. 12 shows the road network of Fig. 3 and different tilings, and serves to illustrate yet another embodiment of the method according to the present invention;

Fig. 13 shows a flow chart representing a method for dynamic route determination, which employs the method for route determination represented by Fig. 6;

Fig. 14 shows a portion of a map, wherein tile resistance values are indicated in greyscales; and

Fig. 15a shows a region searched during an optimum route determination performed according to a method according to an embodiment of the present invention, while Fig. 15b shows the searched region in the same optimum route determination performed according to a conventional method.

Description of Preferred Embodiments

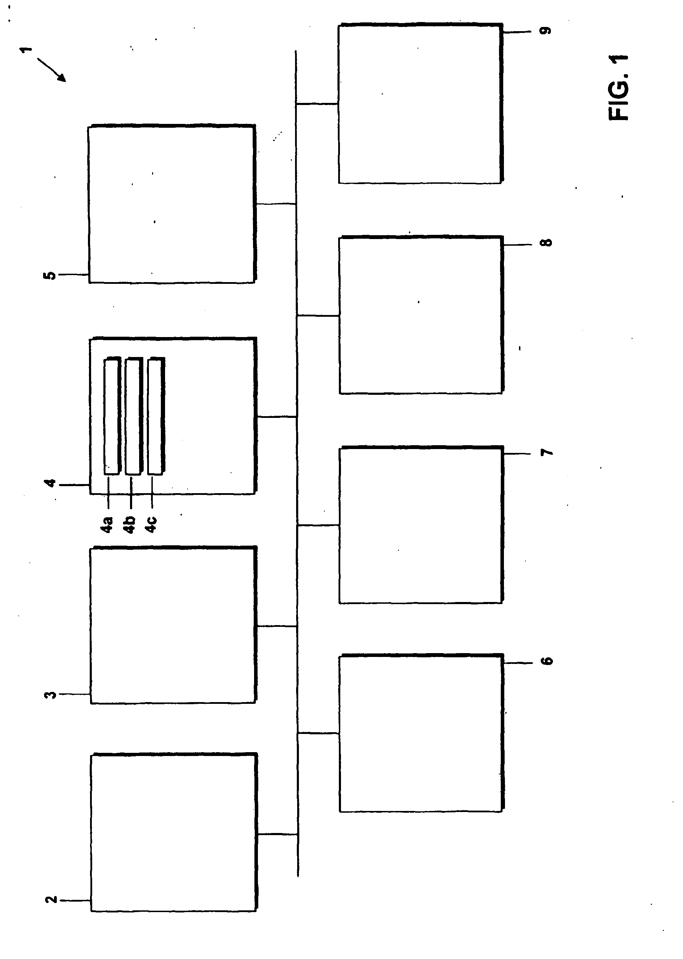

With reference to Fig. 1, a navigation system 1 according to an embodiment of the invention will be described. The system is adapted to determine a route from a starting point to a destination on a road network, using an algorithm which employs an estimation function, such as the A*-algorithm. The system comprises a processing unit 2, a first storage unit 3 containing road network data, a second storage unit 4 containing tiling definition data and resistance values for tiles of a tiling, and a memory unit 5, which components taken in combination form a system for determining a route according to an embodiment of the present invention. The first storage unit 3 and the second storage unit 4 may be different physical devices or may be a single physical device, e.g., a CD-ROM, a CD-RW, a DVD, a memory card, or an internal hard disc.

The road network data stored in the first storage unit 3 is conventional road network data comprising, e.g., graphical information relating to road segment positions and orientations, such as geographical locations of the start and end points of road segments, and additional information quantifying a length of, a characteristic travel speed on, and/or a characteristic travel time for traversing the road segment. More generally, one or several attributes are associated with each road segment, specifying the costs associated with traversing the road segment for a specific cost model as well as, in general, costs associated with road segment junctions.

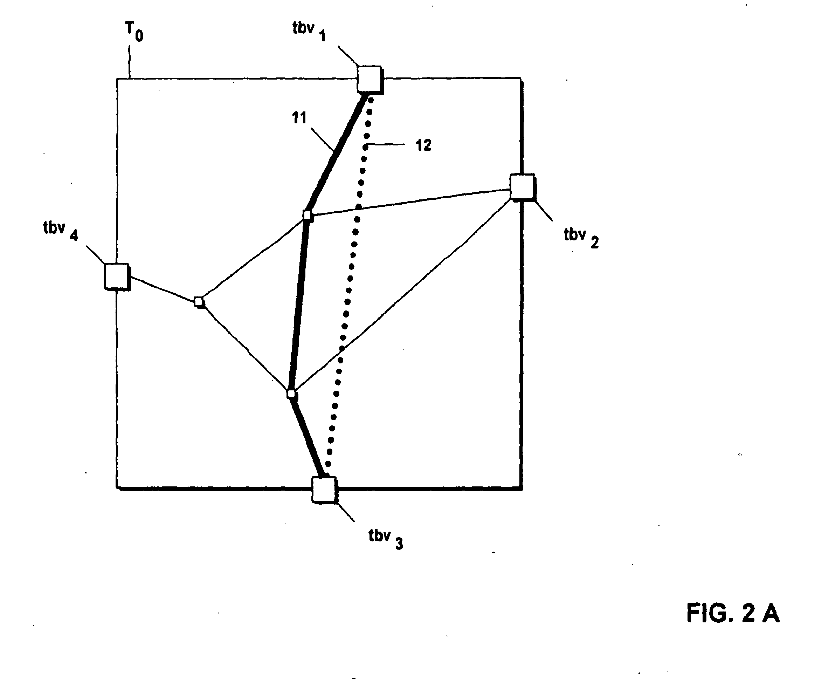

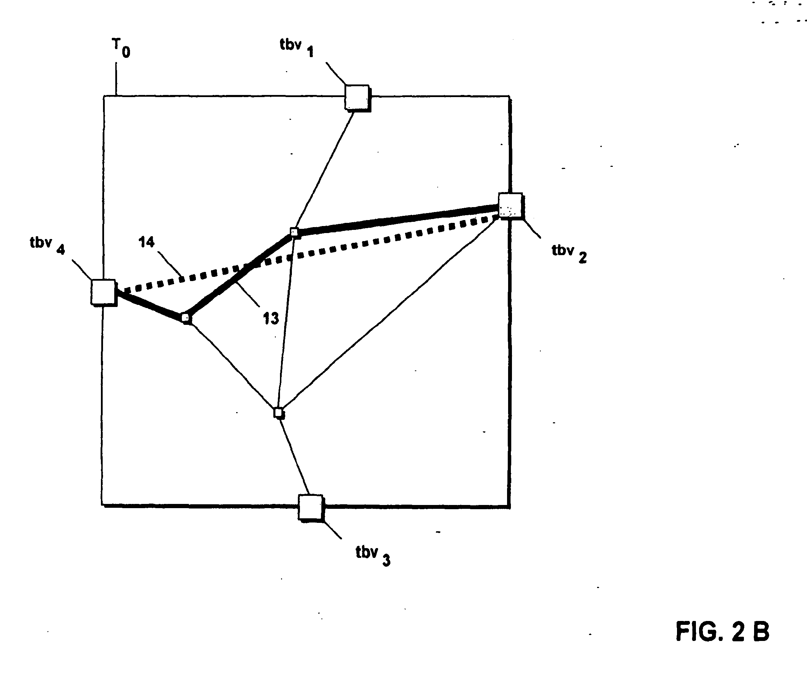

The tiling definition data 4a-4c stored in the second memory unit 4 determine the arrangement of all tiles of the tiling. For the simple case of a rectangular tiling in which all tiles have equal size, each tile is uniquely determined by the coordinates of one of its corners or by an index or a pair of indices specifying the position of the tile in the tiling. Importantly, the second storage unit 4 also contains a resistance value of each tile of the tiling, the resistance value representing costs associated with traversing a tile, as will be explained in more detail with reference to Fig. 2 below.

Data stored in the first storage unit 3 and in the second storage unit 4 may be stored in the memory unit 5 for further processing by the processing unit 2.

The navigation system 1 further comprises input means 6 for inputting, e.g., a destination or user preferences, output means 7 for outputting a determined route, e.g., a display or voice output unit, a position determining means 8 comprising a GPS receiver, and a TMC receiver 9.

Next, with reference to Fig. 2, the definition of the resistance value of a tile will be explained in more detail by describing a method for determining the resistance value. Fig. 2 shows a tile $T_0$ in which a portion of a road network is located. Road segments terminate at vertices indicated by squares, small squares indicating vertices located inside of a tile, while large squares indicate vertices $tbv_1$-$tbv_4$ located on a boundary of the tile.

In order to determine the resistance value of the tile To, first, all vertices located on the tile boundary, in the present case vertices $tbv_1$-$tbv_4$, are determined. Subsequently, for each pair of these vertices located on the tile boundary, an optimum route connecting the pair of vertices is determined, e.g., using Dijkstra's algorithm. For the pairs consisting of vertices $tbv_1$ and $tbv_2$ and of vertices $tbv_2$ and $tbv_4$, these optimum routes are schematically indicated as thick lines 11 and 13, respectively, in Fig. 2a and 2b. Next, for each such pair of vertices, an air-line distance is computed, which is schematically indicated as dotted lines 12 and 14 in Fig. 2a and 2b, respectively, for vertices $tbv_1$ and $tbv_3$, and $tbv_2$ and $tbv_4$. Subsequently, the quotient of the costs associated with the optimum route connecting two vertices and the air-line distance of the two vertices is computed. Finally, the minimum of all these quotients for the various pairs of vertices located on the boundary of the tile is determined. The resistance value of the tile $T_0$ is set equal to this minimum.

Therefore, the resistance values of a tile is given by the following equation:

$$R = \min_{tbv_i} \min_{tbv_j \neq tbv_i} \frac{\text{costs}(tbv_i; tbv_j)}{\text{air} - \text{line distance}(tbv_i; tbv_j)}, \qquad \text{(eq. 1)}$$

wherein R denotes a resistance value of a tile, $tbv_i$ and $tbv_j$ denote vertices located on the boundary of the tile, cost ($tbv_i$; $tbv_j$) denotes the costs associated with a least-cost path connecting $tbv_i$ and $tbv_j$ and traversing the tile, and air-line distance ($tbv_i$; $tbv_j$) denotes the air-line distance of the pair of vertices $tbv_i$ and $tbv_j$. The costs typically include contributions of both road segment costs and costs associated with road segment junctions, which are both taken into consideration.

By virtue of the definition of the resistance value, for arbitrary vertices $tbv_i$ and $tbv_j$ located on the boundary of the tile, the costs associated with an optimum route connecting these vertices fulfils the following inequality:

$$\text{costs}(tbv_i; tbv_j) \geq R \times \text{air} - \text{line distance}(tbv_i; tbv_j). \qquad \text{(eq. 2)}$$

It should be noted that, since the air-line distance of two vertices only depends on road network geometry, the right-hand side of (eq. 2) can be easily calculated as the resistance value R of the tile is known, in order to provide a lower bound for the costs associated with an optimum route connecting the pair of vertices. As will be explained in more detail below, this feature is advantageously harnessed by the method for determining a route according to the present invention.

It should be noted that optimum route search in a road network typically corresponds to a route search in a directed graph, i.e., costs associated with a route from $tbv_i$ to $tbv_3$ may be different from costs associated with a route from $tbv_3$ to $tbv_1$, for example, if one-way roads are located within the tile or if speed limits of road segment are different for opposite travel directions.

Therefore, in general, the expression on the right-hand side of (eq. 1) has to be evaluated for a directed graph, i.e., the order of vertices in the numerator of the quotient is important.

Further, the costs associated with optimum routes connecting vertices located on the tile boundary typically depend on the cost model employed. Therefore, for each tile of the tiling, several resistance values will typically be determined for the most important cost models, such as shortest route and fastest route, and the different resistance values will be stored on the second storage unit 4. In this respect, it is re-emphasized that the resistance values are not computed onboard a vehicle, but are computed during a phase of road network data pre-processing for subsequent use in route determination.

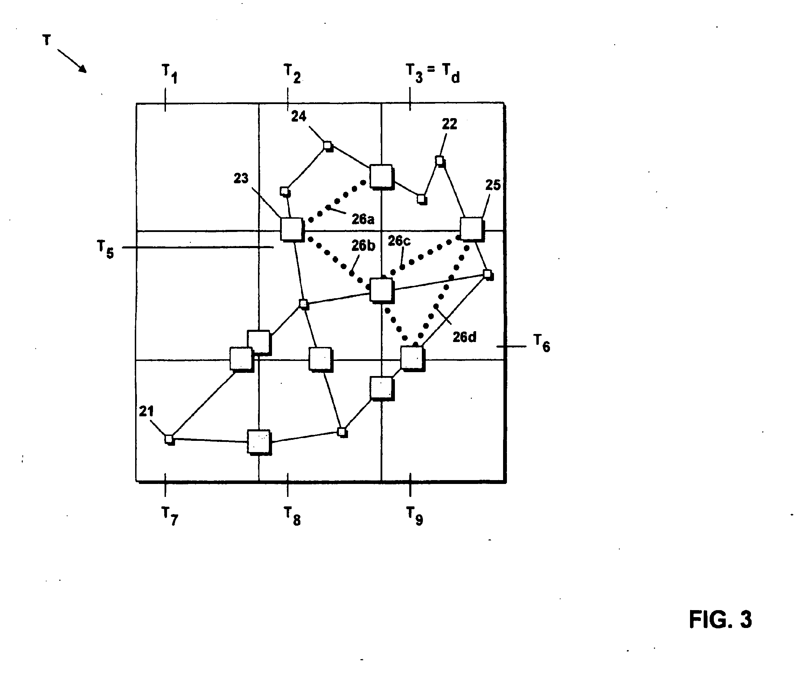

As will next be explained with reference to Fig. 3, the resistance values computed as indicated above may advantageously be employed in route determination. More specifically, an estimation function, as it is employed e.g. in an A*-algorithm, can be readily derived from the resistance values.

Fig. 3 shows an exemplary road network and a tiling T. The tiling comprises tiles $T_1$-$T_9$. Vertices of the road network are, again, indicated by squares, large squares indicating vertices located on tile boundaries. For illustration purposes only, it shall be assumed that an optimum route is to be determined from a starting point 21 to a destination 22. Further, it will be assumed that resistance values determined as indicated above are known for all tiles $T_1$-$T_9$ of the tiling. In order to determine an optimum route using an A*-algorithm, an estimation function must be known for each vertex of the road network, the estimation function providing a lower bound for costs associated with an optimum route connecting an arbitrary vertex of the road network and the destination.

For a vertex located on a tile boundary, e.g., vertex 23 in Fig. 3, a value of the estimation function for this vertex may be determined as follows.

First, a destination tile $T_3$ containing the destination 22 is identified, and the vertices 24, 25 located on the boundary of the destination tile are identified.

Next, Dijkstra's algorithm is performed starting from each one of the vertices 24, 25 located on the boundary of the destination tile $T_3$, for a graph consisting of the vertices of the road network located on tile boundaries only, i.e., of the vertices indicated by large squares in Fig. 3. Some of the edges of this sub-graph are indicated by dotted lines 26a-26d in Fig. 3. The costs associated with any such edge of the sub-graph may be determined by virtue of (eq. 2), i.e., the costs associated with a sub-graph edge are set equal to the resistance value of the tile traversed by the sub-graph edge multiplied by an air-line distance of the vertices connected by the edge. For example, the costs associated with edge 26a are set equal to the resistance value of tile $T_2$ multiplied by the air-line distance of vertices 23 and 24. Since the sub-graph consisting of vertices located on tile boundaries only is typically much smaller than the original road network, Dijkstra's algorithm may be readily performed starting from any one of the vertices 24, 25 located on the boundary of the destination tile. In a preferred embodiment, Dijkstra's algorithm is performed simultaneously for all destination tile boundary vertices by inputting all of these vertices into Dijkstra's algorithm as a set of origins. Further, by virtue of (eq. 2), the costs associated with an optimum route on the sub-graph are a lower bound on the costs associated with an optimum route on the original road network. Assuming, for example, that an optimum route on the sub-graph connects vertex 24 with vertex 23 via edge 26a, then the resistance value of tile $T_2$ multiplied by the length of edge 26a provides a lower bound on the costs associated with an optimum route from vertex 24 to vertex 23 on the original road network.

Therefore, once the costs associated with optimum routes connecting a vertex 23 located on a tile boundary with any one of the vertices 24, 25 located on the boundary of the destination tile is known on the sub-graph, the minimum of all these costs also provides a lower bound for costs associated with an optimum route on the original graph.

More generally, the estimation function for a vertex tbv located on a tile boundary may be established from the following equation:

$$\text{estimation function (tbv)} = \min_{dtbv_i} \text{costs}_{SG}(dtbv_i; tbv), \quad \text{(eq. 3)}$$

wherein $dtbv_i$ denote vertices located on the boundary of the destination tile, and $\text{costs}_{SG}$ denote costs associated with optimum routes on the sub-graph, which is defined as explained above, the route connecting $dtbv_i$ and tbv. The minimum on the right-hand side of the above equation is taken over all vertices located on the boundary of the destination tile.

The accuracy of the estimation function may be further improved by taking into account the costs associated with routes connecting the destination 22 with the destination tile boundary vertices 24, 25:

$$\text{estimation function (tbv)} = \min_{dtbv_i}\left[\text{costs}_{SG}(dtbv_i; tbv) + \text{costs}(d; dtbv_i)\right], \qquad (eq.\ 4)$$

wherein the second term in the square brackets on the right-hand side of (eq. 4) represents the costs of an optimum route connecting the destination with each one of the destination tile boundary vertices. These costs may, e.g., be determined using Dijkstra's algorithm in the destination tile $T_3$. However, any lower bound may be used instead of the actual costs, e.g., a lower bound based on air distance only. For the case of the trivial lower bound, for which the second term in the square brackets of (eq. 4) is set equal to zero, (eq. 4) reduces to (eq. 3).

In the preferred embodiment, in which Dijkstra's algorithm is performed such that all destination tile boundary vertices are simultaneously input thereto as set of origins, the right-hand side of (eq. 4) can be readily determined in this Dijkstra's algorithm if costs (d; $dtbv_i$) are already known, e.g., by performing Dijkstra's algorithm on the destination tile on the original road network, and if these values are input to the Dijkstra's algorithm performed on the sub-graph defined as described above.

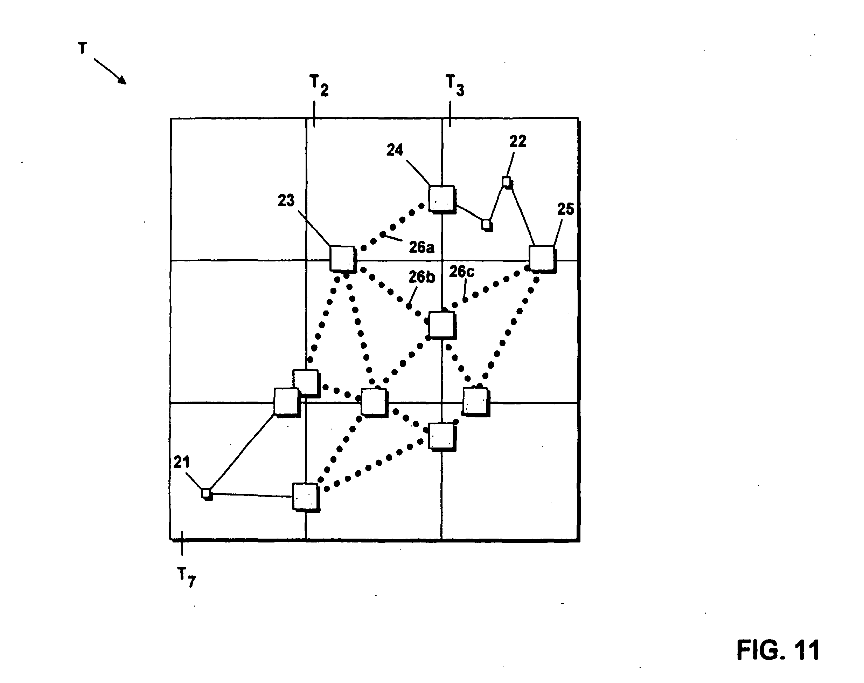

Alternatively, the right-hand side of (eq. 4) can be computed by defining a new graph comprising the original road segments located in the destination tile and, outside the destination tile, edges connecting vertices located on tile edges only. Such a re-defined graph, shown in Fig. 11, will be explained in more detail below. The costs determined for tile boundary vertices by performing Dijkstra's algorithm on the re-defined graph are the right-hand side of (eq. 4) for the respective tile boundary vertices.

It will be appreciated that, while the above explanation has been restricted to vertex 23 for illustrative purposes, the estimation function for any vertex located on a tile boundary may be determined as described above. Once the estimation function has been determined for all vertices located on tile boundaries, it may also be readily determined for vertices located in the inside of a tile, as will be explained next.

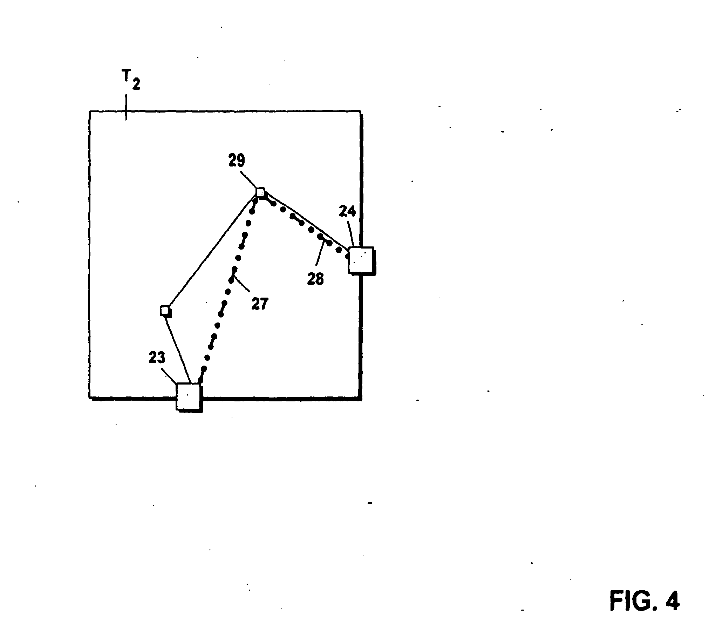

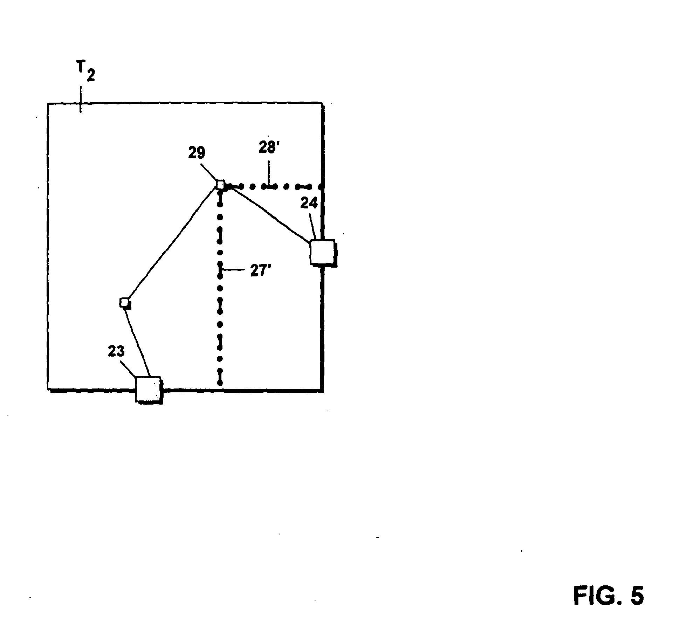

Figs. 4 and 5 show a tile $T_2$ of the tiling T of Fig. 3 and the portion of the road network located therein. Since the estimation function has already been determined for vertices 23 and 24, which estimation function provides a lower bound for costs associated with an optimum route connecting these vertices and the destination, the estimation function for vertex 29 located inside tile $T_2$ may be determined as follows.

In one embodiment, the exact costs associated with optimum routes connecting vertex 29 with vertices 23 and 24, respectively, are determined using Dijkstra's algorithm. Next, the sum of these costs and the estimation function of the corresponding vertex located on the tile boundary is computed, and the smaller one of the sums provides the estimation function value for vertex 29.

However, it is not necessary to compute the exact costs associated with an optimum route connecting vertex 29 and vertex 24 or vertex 23. Rather, any suitable lower bound may be employed. For example, as shown in Fig. 4, the air-line distances schematically indicated as dashed-dotted lines at 27 and 28, respectively, may be used for estimating the costs associated with routes connecting vertex 29 and the vertices located on the boundary of tile $T_2$.

Since the computation of air-line distances as shown in Fig. 4 involves the evaluation of square routes, in order to further expedite the computation of the estimation function, alternatively, the perpendicular distances 27' and 28' may also be employed as lower bounds for costs associated with routes inside the tile, as schematically indicated in Fig. 5. For example, assuming a shortest-route search, the estimation function of vertex 29 is set equal to the smaller of the estimation function of vertex 24 plus the perpendicular distance 27' and the estimation function of vertex 24 plus the perpendicular distance 28'. Finally, in yet another embodiment, the estimation function for each vertex inside the tile may simply be set equal to the minimum of the estimation functions of the vertices located on the boundary of this tile, thereby reducing computational complexity in determining the estimation function at the expense of accuracy of the estimation function.

Figs. 2-5 serve to illustrate the fundamental principles underlying the determination of an estimation function according to the various embodiments of the present invention. It should be noted that the determination of the resistance values as described with reference to Fig. 2 is intended to be also comprised by the scope of the present invention.

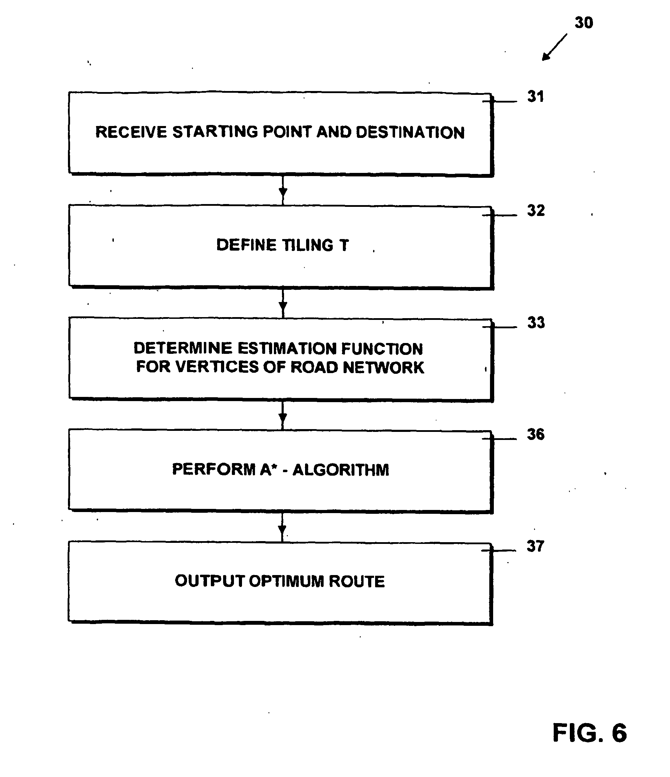

Next, with reference to Figs. 6-10, methods for determining a route from a starting point to a destination according to various embodiments will be described in detail.

Fig. 6 shows a flow chart schematically representing a method for determining a route according to an embodiment of the present invention, the method generally being indicated by 30. First, at step 31, a starting point and a destination is received. Information relating to the starting point and the destination may, for example, be provided by a user input, or the starting point may also be provided automatically by the position determining means 8.

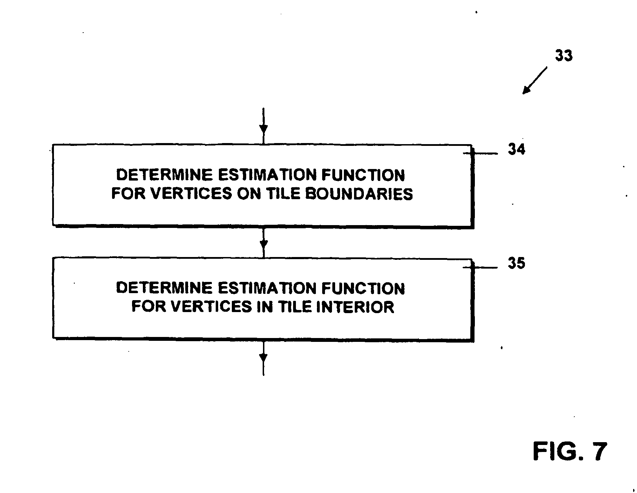

At step 32, the tiling T is defined, which covers an area wherein at least a portion of the road network is contained on which the optimum route search is to be performed. At step 33, the estimation function is determined for a plurality of vertices of the road network, this step being described in more detail with reference to Figs. 7-10 below. Once the estimation function is known for all or, at least, all relevant vertices of the road network, at step 36, an A*-algorithm is performed for determining an optimum route from the starting point to the destination based on the estimation function previously determined in step 33. Finally, at step 37, the optimum route is output via the output means 7, e.g., in the form of an electronic map or as a voice output.

In one embodiment of the present invention, the step 33 of determining the estimation function for vertices of the road network is performed as a two-step process, as will be explained next with reference to Figs. 7-9. As schematically indicated in the flow chart of Fig. 7, first, at step 34, the estimation function is determined for vertices located on tile boundaries, and subsequently, at step 35, the estimation function is determined for vertices located in tile interiors.

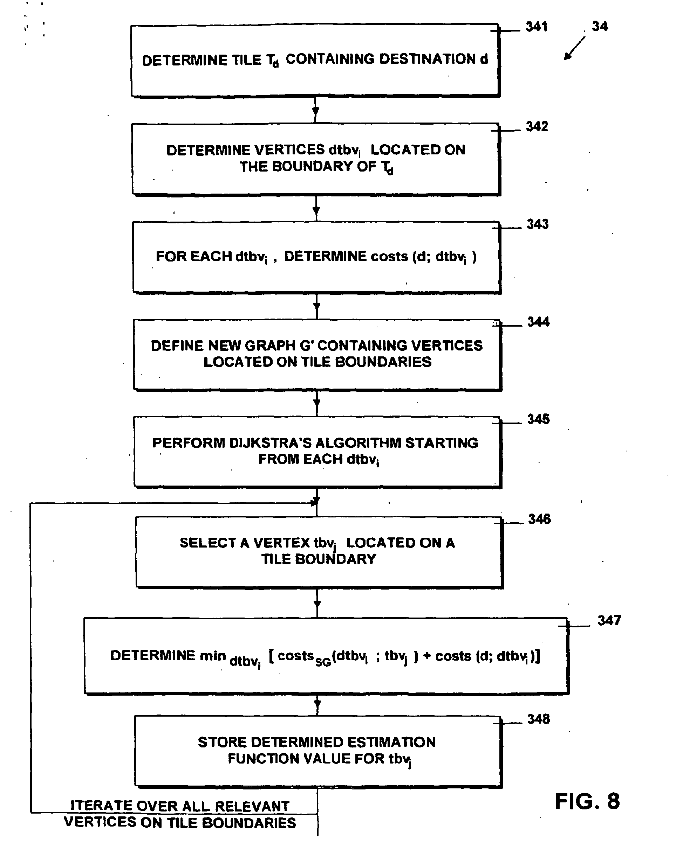

Fig. 8 schematically indicates a flow chart representing the step 34 of determining the estimation function for vertices located on tile boundaries. First, at step 341, the tile $T_d$ containing the destination d is determined, and at step 342, the vertices located on the boundary of the tile $T_d$ are determined, these vertices being denoted by $dtbv_i$. At step 343, for each vertex located on the boundary of the destination tile, a lower bound for the costs associated with an optimum route connecting the destination d and the destination tile boundary vertex is determined, the lower bound being denoted as cost (d; $dtbv_i$). This lower bound may be determined, e.g., using Dijkstra's algorithm on the destination tile, or employing any other suitable method which has been explained with reference to Fig. 3 above.

At step 344, a new graph is defined, which is a sub-graph of the original road network and comprises vertices located on tile boundaries only. Importantly, as has been explained with reference to Fig. 3 above, the costs associated with an edge of the sub-graph are determined based on the resistance values of the various tiles of the tiling, generally in combination with geometrical properties of the road network. At step 345, Dijkstra's algorithm is performed starting from each one of the vertices located on the destination tile. In a preferred embodiment, Dijkstra's algorithm in step 345 is performed only once, having all destination tile boundary vertices as set of origins.

Instead of Dijkstra's algorithm, in step 345, an A*-algorithm may be performed, directed from the destination tile boundary vertices towards the starting point and employing an air-line-based estimation.

Finally, in steps 346-348, an iteration is performed over vertices located on tile boundaries in order to determine the estimation function for these vertices. At step 346, a vertex located on a tile boundary is selected. At step 347, the estimation function for this vertex is determined as explained with reference to (eq. 4) above, i.e., from a lower bound of the costs associated with an optimum route connecting the vertex and a vertex located on the boundary of the destination tile, which is determined in step 345, and the costs associated with routes connecting the vertex located on the boundary of the destination tile and the destination. Finally, at step 348, the determined estimation function value is stored in the memory unit 5.

The iteration over vertices located on tile boundaries in steps 346-348 may be terminated according to any suitable termination criteria, e.g., if the estimation function is known for all vertices located on tile boundaries or, at least, for all vertices located on the boundaries of tiles which may be relevant to the optimum route determination.

It should be noted that the flow chart of Fig. 8 is only schematic, and that several of the steps depicted therein may be performed in parallel. For example, in a preferred embodiment, step 345 and the iteration in steps 346-348 is performed such that Dijkstra's algorithm or an A*-algorithm is performed, having all destination tile boundary vertices simultaneously as input, the search being performed towards the starting point of the route search. Alternatively, steps 343, 345, and 346-348 may be performed in parallel by first re-defining the graph, as will be explained with reference to Fig. 11 below, and by then performing Dijkstra's algorithm or an A*-algorithm on the re-defined graph.

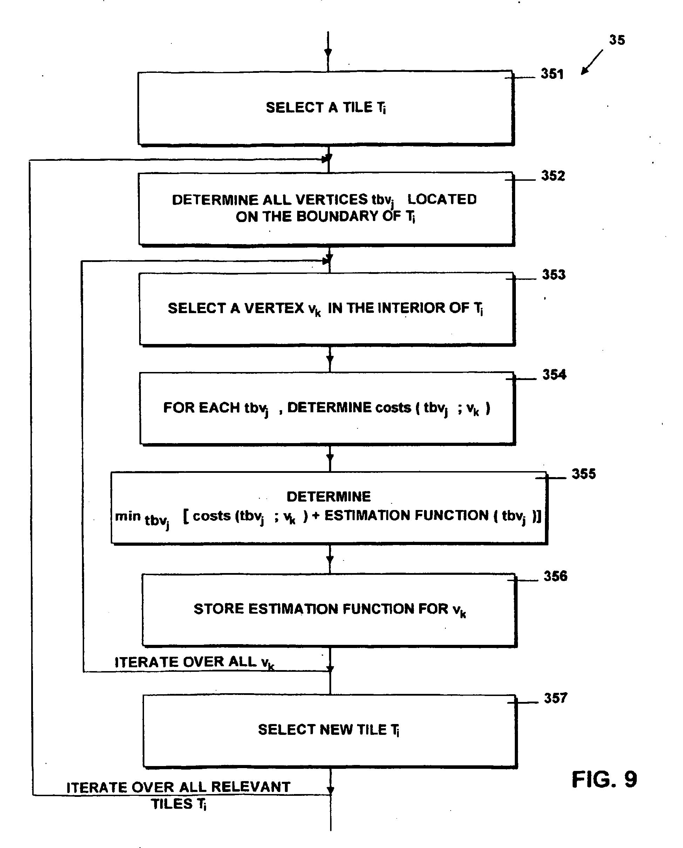

Once the estimation function is known for all relevant vertices located on tile boundaries, at step 35, the estimation function is determined for vertices located in the inside of tiles, as will be explained next in more detail with reference to Fig. 9. First, at step 351, a tile $T_i$ is selected. Then, at step 352, all vertices located on the boundary of this tile are determined. An iteration over all vertices located in the interior of the tile is performed in steps 353-356. First, at step 353, a vertex located in the tile interior is selected. At step 354, for each vertex located on the boundary of this tile, a lower bound on the costs of an optimum route connecting the selected vertex in the interior of the tile and the vertex located on the tile boundary is determined. While, in Fig. 9, this value is schematically represented as the exact costs associated with an optimum route connecting these two vertices, which may be obtained, e.g., using Dijkstra's algorithm on the selected tile, any other suitable method for obtaining a lower bound for these costs may be employed, as explained with reference to Figs. 4 and 5 above. Next, at step 355, the minimum of these costs plus the estimation function for the corresponding vertex located on the tile boundary is determined, and the estimation function for the vertex located in the tile interior is set equal to this minimum. At step 356, the determined estimation function value is stored. Steps 353-356 are iterated over all vertices located in the tile interior. After termination of the iteration over vertices locates in the tile interior, at step 357, a new tile $T_i$ is selected, and steps 352-356 are iterated over all relevant tiles of the tiling.

Returning to Fig. 6, with the estimation function for all relevant vertices of the road network being determined based on the resistance values of the tiles of the tiling, as described above, an A*-algorithm can be performed which employs this estimation function. Again, it should be emphasized that the definition of the tiling T and the provision of resistance values for tiles of the tiling allows the estimation function employed in the A*-algorithm to be readily and reliably computed.

It will be appreciated that the above description with reference to Figs. 6-9 only represents one advantageous embodiment of the method according to the present invention, and that various modifications are conceivable. For example, while, at step 344, the costs associated with an edge of the sub-graph may be estimated by multiplying the resistance values of a tile by an air-line distance of a pair of vertices located on the boundary of this tile, the costs associated with the sub-graph edge may also be determined in any other suitable way. For example, if the vertices are located on opposite edges of the tile boundary, the costs associated with an edge connecting the pair of vertices may be approximated by the product of the resistance value and the edge length of the tile. Still further, for computing the estimation function, a plurality of vertices locate on one edge of a tile may be contracted into a single vertex, thus further reducing complexity of the computation of the estimation function.

While, in the above description, in steps 343, 347, 354, and 355, the exact costs associated with an optimum route connecting a vertex located in the interior of a tile and a vertex located on the tile boundary have been employed, any other suitable method providing a lower bound for these costs may be used. For example, as explained with reference to Figs. 4 and 5 above, an air-line distance of vertices, or a distance of the vertex from tile boundaries may be employed for deriving a lower bound on these costs.

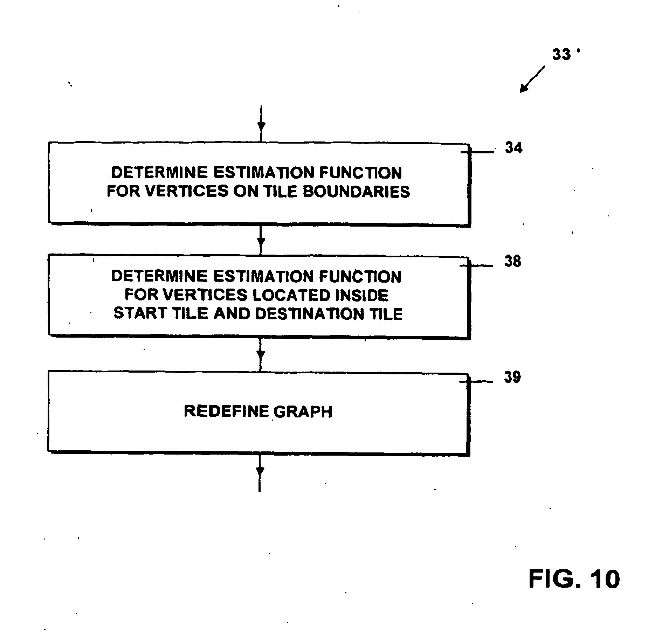

Another modification of the method shown in Fig. 6 will next be explained with reference to Figs. 10 and 11. According to this modification, step 33 of Fig. 6 is replaced by step 33' of Fig. 10. The fundamental idea underlying this modification is that, for determining an optimum route from the starting point to the destination, it is not always necessary to compute the estimation function for vertices located in tile interiors.

According to the modification, first, at step 34, the estimation function is determined for vertices located on tile boundaries. This step is performed as explained with reference to Fig. 8 above. Next, at step 38, the estimation function is determined for vertices located inside the start tile containing the starting point and inside the destination tile containing the destination. For the destination tile, this may be achieved, e.g., using Dijkstra's algorithm starting from the destination. For the start tile, the estimation function may be determined as explained with reference to Fig. 9 above. Next, at step 39, the graph on which optimum route search is to be performed is redefined such that it is comprised of all vertices located in the start tile and the destination tile, as well as all vertices located on tile boundaries. For the road network shown in Fig. 3, this is schematically indicated in Fig. 11. The costs associated with those edges of the modified graph, which connect pairs of vertices located on the boundary of one tile, may be determined in any suitable way, e.g., by performing Dijkstra's algorithm on this tile and determining the minimum costs associated with a route connecting the pair of vertices located on the tile boundary. Subsequently, an optimum route search is performed on the modified graph. It will be appreciated that, since vertices of a tile are contracted into a smaller number of vertices located on the boundary of the tile, the vertices have to be extracted prior to outputting a determined optimum route to a user. This may, for example, again be achieved by an optimum route search based on Dijkstra's algorithm for individual tiles.

While, in Figs. 3 and 11, the tiling T is shown to be comprised of a plurality of tiles having identical size and shape, this need not necessarily be the case.

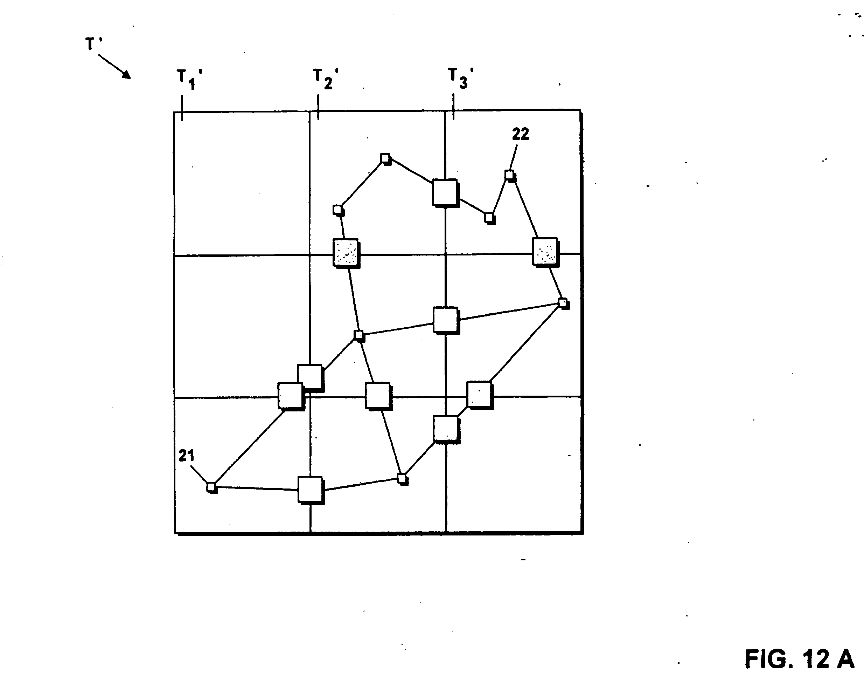

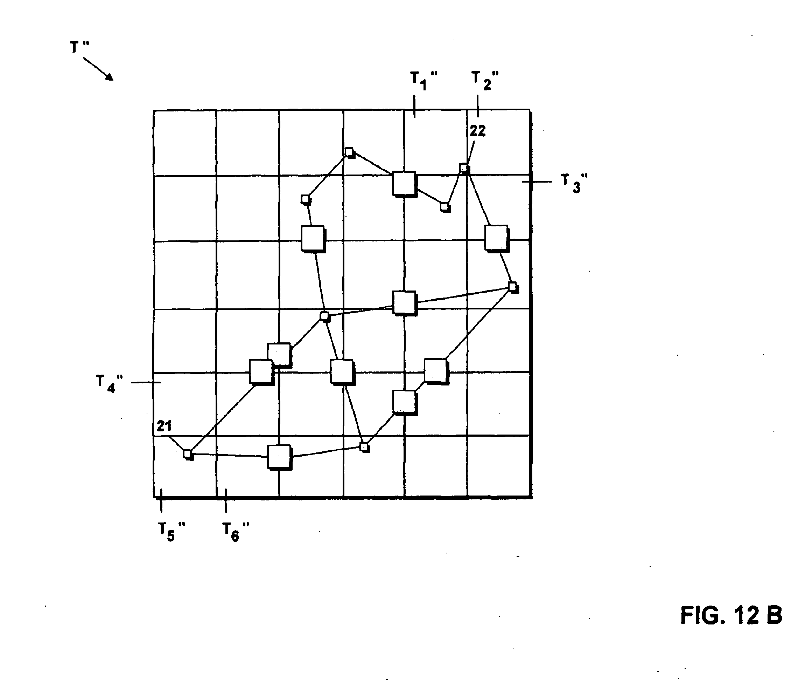

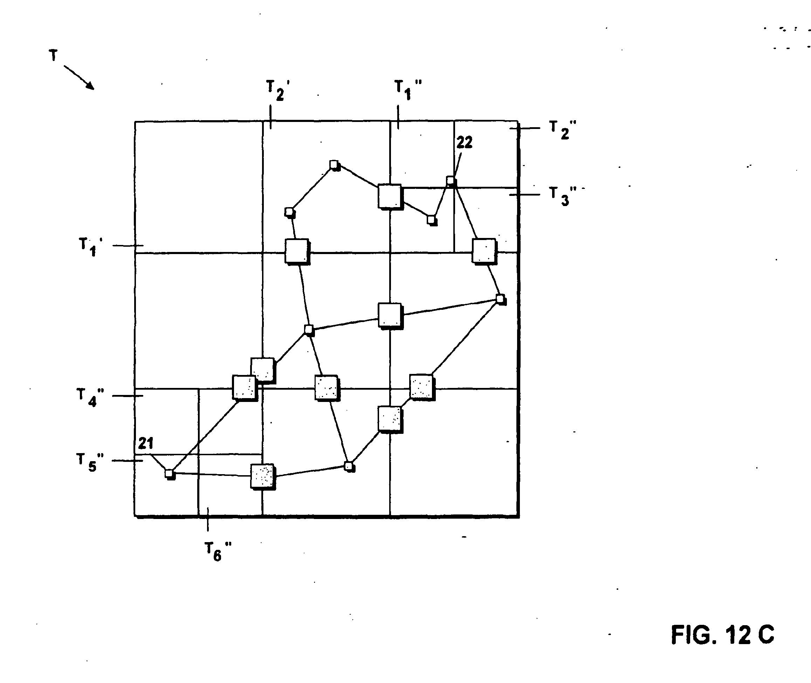

Indeed, as will be explained with reference to Fig. 12 next, it may be advantageous to select a tiling having an inhomogeneous tiling size. For this purpose, two different tilings T' and T" shown in Fig. 12a and 12b are defined covering the area in which at least a portion of the road network is contained. It should be noted that, for the tiling T", the road network is defined such as to have a vertex on the intersection of each road segment and tile boundary, but that not all of these vertices are displayed for clarity of representation.

For both the tiling T' and the tiling T", a resistance value is computed for each tile, as explained with reference to Fig. 2 above. The tiling definition data and associated resistance values are stored in the second storage unit 4 for both tilings T', T".

Only after the starting point and the destination have been input, the tiling T shown schematically in Fig. 12c is defined such that it comprises both tiles of the tiling T' having a larger tile size and of the tiling T" having a smaller tile size. More particularly, smaller tiles $T_1"$-$T_6"$ are selected for a neighbourhood of the starting point and the destination, while larger tiles $T_1'$ and $T_2'$ are selected for regions at a distance from both the starting point and the destination. For each tile of this tiling having an inhomogeneous tile size, the resistance value is chosen to be the resistance value determined for the respective tile size and stored in the second storage unit 4. The various methods for determining a route from the starting point to the destination explained with reference to Figs. 6-10 above may be readily applied to the inhomogeneous tiling shown in Fig. 12c.

In this context, it should also be appreciated that, while square tiles are shown in the drawings, any other suitable tile shape may be employed. Further, not all tiles need to have the same shape.

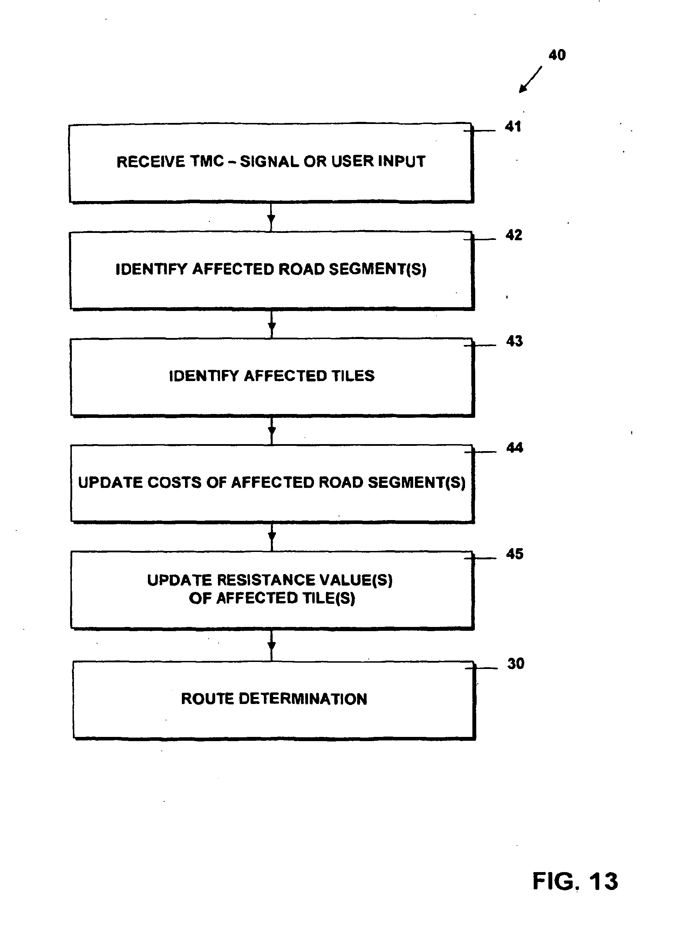

Since, according to the present invention, the estimation function is determined based on the resistance values of tiles when the method for determining a route is performed, the method of the present invention may be readily adapted to dynamic route determination, as will be explained with reference to Fig. 13 next. The method for dynamic route determination is generally indicated at 40. First, at step 41, a TMC signal or a user input is received, which indicates that specific road segments are to be avoided, e.g., due to a traffic jam or due to user preferences. Next, at step 42, the road segments affected by the TMC signal or the user input are identified. After that, at step 43, all tiles containing affected road segments are identified. At step 44, the costs associated with the affected road segments are updated according to the received TMC signal or user input. At step 45, the resistance value or the resistance values of the tiles containing affected road segments is updated. Subsequently, a route determination 30, as explained with reference to Figs. 6-10 above, is carried out, taking into account both the updated costs of affected road segments and the updated resistance values of affected tiles. In particular, in step 33, the estimation function is computed based on the updated resistance values.

The updating of resistance values of affected tiles, in step 45, may be carried out in a variety of different ways. For example, if the costs associated with a road segment located in an affected tile are increased, the resistance value of the affected tile may be multiplied by a given constant. The constant may be dependent on the received user input or TMC signal. Many user inputs or TMC signals are such that they result in that all road segments contained in a given tile should preferably be avoided. If, in such a case, the costs associated with each one of these road segments are increased my a multiplicative factor, the resistance value of the tile containing these road segments will be multiplied by the same factor. In such a case, exact optimum routes can still be determined.

It should be noted that it is not necessary to update resistance values of tiles, even if road segment costs are changed. Rather, the estimation function determined based on the original resistance values still underestimates costs to the destination. Therefore, step 45 may also be omitted.

Alternatively, several resistance values may be provided for a single tile, which reflect the resistance values computed for, respectively, a given cost model without any specific user preferences or TMC signals, and for this given cost model when taking into consideration common TMC signals or user preferences. For example, for a tile which contains a road segment that is prone to traffic jams, two resistance values may be computed, one for the case that the road segment is not blocked, and one for the case that the road segment is blocked. Then, in dependence on the TMC signal received in step 41, either one of these resistance values is selected in step 45.

Frequently, optimum routes are determined for cost models that are formed of linear combinations of different cost models. For example, various weighted combinations of shortest-route and fastest-route cost models may be employed. If X and Y denote different cost models, and $\alpha \cdot X + \beta \cdot Y$ denotes the linear combination thereof, the resistance value of a tile for the combined cost model fulfils the following relation:

$$R(\alpha \cdot X + \beta \cdot Y) \geq \alpha \cdot R(X) + \beta \cdot R(Y), \qquad (eq.\ 5)$$

where R(X) and R(Y) denote the resistance values for the respective tile based on cost models X and Y, respectively. Therefore, the linear combination of the resistance values of cost models provides a lower bound on the resistance value of the linear combination of cost models. Since, for determining an estimation function, it is sufficient to provide a lower bound of costs, an estimation function for cost model $\alpha \cdot X + \beta \cdot Y$ may be obtained by approximating the resistance values of the combined cost model by the respective linear combination of the resistance values of the underlying, fundamental cost models X and Y.

Therefore, in an embodiment of the present invention, for each tile of the tiling, a plurality of resistance values is stored that correspond to different basis cost models. If route search is performed for a cost model that corresponds to a linear combination of basis cost models, in the methods indicated in Figs. 6-10, in a first step, the resistance value for a tile is determined as linear combination of basis cost models. In one embodiment, the basis cost models comprise shortest route and fastest route.

It will be appreciated that, due to the local nature of the resistance value, the present method and system are well suited for partial map updates. More specifically, if an existing road network is modified, or if the road network is supplemented by additional road segments on its exterior, e.g., if new parts of a road network are digitized, only the resistance values of those tiles need to be updated in which the road network actually has been modified.

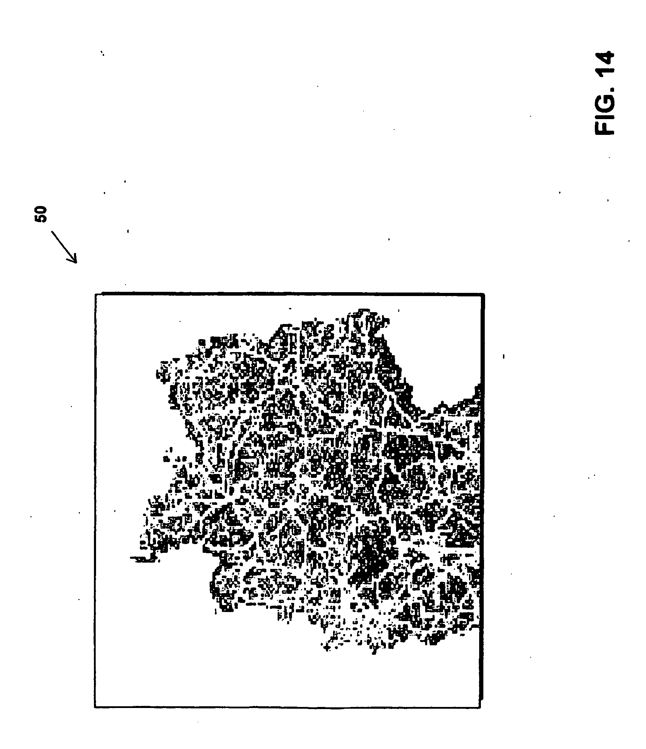

Fig. 14 schematically shows a map portion of northern and central Germany, in which resistance values of tiles are indicated in a greyscale representation. Tiles are chosen to be square in shape, having an edge length of eight kilometres. Resistance values are computed for a fastest-route cost model. As may be seen, the highways of the German road network may be clearly detected in the resistance values.

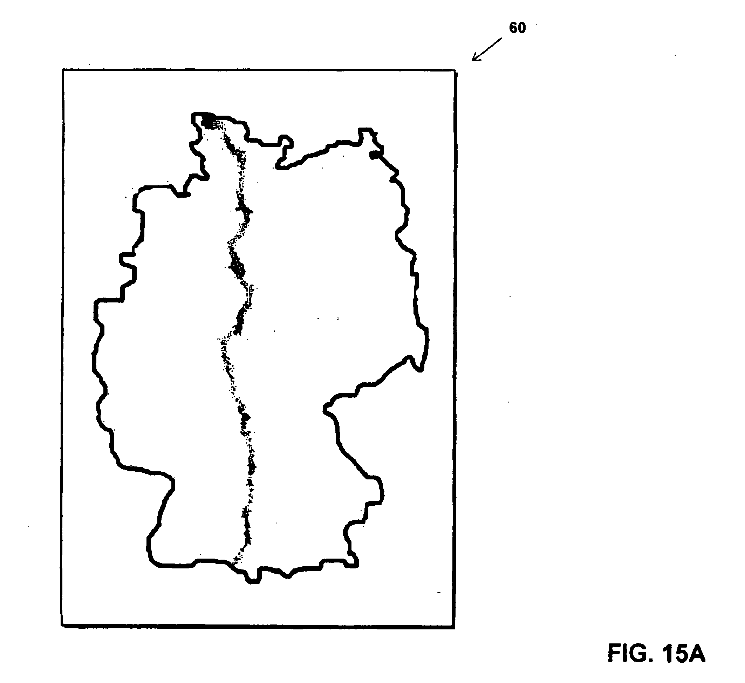

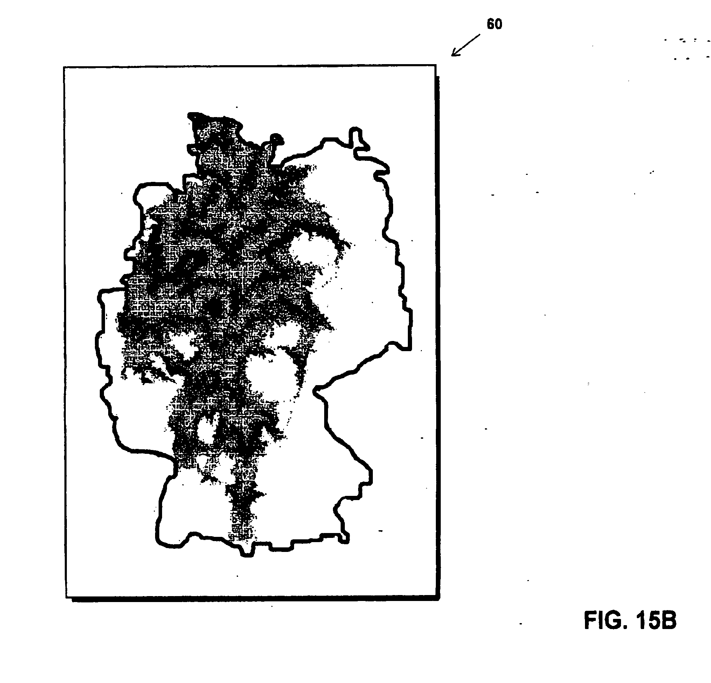

Fig. 15 shows the searched region in an optimum route search from northern Germany to southern Germany in a grey scale representation, again employing a square tiling with an edge length of eight kilometres. Fig. 15a shows the searched region in the optimum route determination performed according to the present invention, while Fig. 15b shows the searched region in an optimum route determination according to a conventional method. More specifically, in Fig. 15a, the estimation function has been determined based on tile resistance values, while in Fig. 15b, a conventional estimation function based on air-line distance has been employed. The optimum route is determined using an A*-algorithm. Tiles explored via edge relaxation are indicated in various greyscales, the different colors representing the accrued travel time from the starting point. As may be clearly seen, the number of tiles that need to be explored is much smaller in the method according to the present invention (Fig. 15a) than in the conventional method (Fig. 15b). This results in shorter run times for the optimum route search.

The methods according to the various embodiments of the present invention may be readily inter-combined with any methods in which only a subset of road segments is searched in the optimum route determination. Examples for such methods are disclosed, e.g., in EP 1 027 578 or in WO 03/079155 or in European patent application no. 05 024 414, or are heuristic methods based on FRC. These methods may be integrated with the method according to the present invention by accordingly restricting the road network to be searched in the A*-algorithm.

In summary, according to the present invention, a method and system for determining a route which employs an estimation function is provided, wherein the value of the estimation function for vertices of the road network is determined based on a tiling and based on resistance values of tiles of the tiling. As is evident from the above description of preferred embodiments, according to the present invention, an accurate estimation function may be determined, partial map updates may be readily carried out, and dynamical route determination may be easily implemented. The present invention may be advantageously employed in any optimum route search, in particular, in determination of optimum routes on a road network.

**Claims**

1. A method for determining a route from a starting point to a destination on a road network,
   which method employs an estimation function for a plurality of vertices of said road network, the estimation function providing a lower bound for costs associated with any route connecting a vertex of said road network and said destination,
   the method comprising the steps of

   - defining a tiling (T) covering an area wherein at least a portion of said road network is contained,
   - providing a resistance value of each tile of said tiling, and
   - determining an estimation function value for a tile boundary vertex (23) located on a tile boundary in dependence on the resistance values of tiles of said tiling,

   wherein the resistance value of a given tile represents costs associated with routes connecting vertices of said road network located on a boundary of said given tile, and a lower bound for costs associated with said routes connecting vertices located on the boundary of said given tile is derived using said resistance value of said given tile.

2. The method according to claim 1,
   **characterized in that**
   said resistance value of said given tile (To) represents costs associated with routes (11, 13) connecting vertices ($tbv_1$-$tbv_4$) located on the boundary of said given tile in relation to a geometrical property of said road network in said given tile.

3. The method according to claim 1 or 2,
   **characterized in that**
   said resistance value of said given tile (To) is a lower bound for the costs associated with an optimum route (11, 13) connecting a pair of vertices ($tbv_1$-$tbv_4$) located on the boundary of said given tile relative to an air-line distance (12, 14) of said pair of vertices, the route traversing said given tile.

4. The method according to claim 3,
   **characterized in that**
   said resistance value of said given tile (To) is the minimum of the costs associated with an optimum route (11, 13) connecting any pair of vertices ($tbv_1$-$tbv_4$) located on the boundary of said given tile divided by the air-line distance (12, 14) of said pair of vertices, such that the product of said resistance value of said given tile and an air-line distance of any pair of test vertices located on the boundary of said given tile is a lower bound of costs associated with an optimum route connecting said pair of test vertices within said given tile.

5. The method according to any one of the preceding claims,
   **characterized in that**
   the step of determining said estimation function value for said tile boundary vertex (23) comprises the steps of

- determining a destination tile ($T_3$) containing said destination (22), and
- determining a first lower bound for costs associated with an optimum route connecting at least one destination tile boundary vertex (24, 25) located on a boundary of said destination tile ($T_3$) and said tile boundary vertex (23).

**6.** The method according to claim 5,
**characterized in that**
said first lower bound is determined in dependence on the resistance value of a tile or in dependence on the resistance values of a plurality of tiles of said tiling.

**7.** The method according to claim 6,
**characterized in that**
said first lower bound is determined using Dijkstra's algorithm or an A\*-algorithm for a sub-graph of said road network comprising vertices (23-25) located on tile boundaries only.

**8.** The method according to claim 7,
**characterized in that**
costs associated with a sub-graph edge (26a) connecting first and second vertices (23, 24) located on a boundary of an arbitrary tile ($T_2$) are determined from a resistance value of said arbitrary tile and an air-line distance of said first and second vertices (23, 24).

**9.** The method according to claim 8,
**characterized in that**
said costs associated with said sub-graph edge (26a) are set equal to the resistance value of said arbitrary tile ($T_2$) multiplied by the air-line distance of said first and second vertices (23, 24).

**10.** The method according to any one of claims 5-9,
**characterized in that**
the step of determining said estimation function value for said tile boundary vertex (23) further comprises the steps of

- determining a second lower bound for costs associated with an optimum route connecting said destination (22) and said at least one destination tile boundary vertex (24, 25), and
- adding said first lower bound and said second lower bound.

**11.** The method according to claim 10,
**characterized in that**
the step of determining said estimation function value for said tile boundary vertex (23) further comprises the step of determining a minimum of a sum of said first lower bound and said second lower bound over all destination tile boundary vertices (24, 25).

**12.** The method according to any one of the preceding claims,
**characterized by** the step of
- determining an estimation function value for an interior vertex (29) located inside of a tile ($T_2$) from an estimation function value for a tile boundary vertex (23, 24) located on the boundary of said tile ($T_2$) and a lower bound for costs associated with an optimum route connecting said interior vertex (29) and said tile boundary vertex (23, 24). '

**13.** The method according to claim 12,
**characterized in that**
said lower bound for costs associated with an optimum route connecting said interior vertex (29) and said tile boundary vertex (23, 24) is determined from an air-line distance (27, 28) of said interior vertex (29) and said tile boundary vertex (23, 24).

**14.** The method according to claim 12,
**characterized in that**
said lower bound for costs associated with an optimum route connecting said interior vertex (29) and said tile boundary vertex (23, 24) is determined from a minimum air-line distance (27', 28' of said interior vertex from an edge of said tile on which said tile boundary vertex (23, 24) is located.

**15.** The method according to any one of the preceding claims,

**characterized by** the steps of

- detecting an increase in a cost factor of a road segment of said road network, and
- increasing a resistance value of a tile containing said road segment in dependence on said detected increase in cost factor.

16. The method according to claim 15,
**characterized in that**
said increasing the resistance value of said tile containing said road segment is multiplicative.

17. The method according to claim 15 or 16,
**characterized in that**
said cost factor of said road segment is increased depending on a user input.

18. The method according to any one of claims 15 - 17,
**characterized by** the step of

- automatically receiving a traffic message signal, wherein said cost factor of said road segment is increased depending on the received traffic message signal.

19. The method according to any one of the preceding claims,
**characterized in that**
a tile size of tiles $(T_1, T_2', T_1''-T_6'')$ of said tiling (T) increases with increasing distance from said starting point and said destination.

20. The method according to claim 19,
**characterized in that**

- a first resistance value is provided for each tile of a first regular tiling (T'),
- a second resistance value is provided for each tile of a second regular tiling (T''), and
- said tiling (T) covering said area comprises tiles $(T_1', T_2')$ of said first regular tiling (T') and tiles $(T_1''-T_6'')$ of said second regular tiling (T''), the resistance values of tiles of said tiling being equal to the corresponding first and second resistance values, respectively.

21. The method according to any one of the preceding claims,
**characterized in that**,
for each tile of said tiling (T), a first basis resistance value and a second basis resistance value are provided which, respectively, represent first and second basis cost models, wherein, for a cost model formed as a linear combination of the first and second basis cost models, a lower bound on the resistance value is determined by linear combination of the first and second basis resistance values.

22. The method according to any one of the preceding claims,
**characterized in that**
an optimum route from said starting point to said destination is determined employing an A*-algorithm which uses the estimation function determined in dependence on the resistance values of tiles of said tiling.

23. A method for determining a route from a starting point to a destination on a graph,
which method employs an estimation function for a plurality of vertices of said graph, the estimation function providing a lower bound for costs associated with any route connecting a vertex of said graph and said destination,
the method comprising the steps of

- defining a tiling (T) covering an area wherein at least a portion of said graph is contained,
- providing a resistance value of each tile of said tiling, and
- determining an estimation function value for a tile boundary vertex (23) located on a tile boundary in dependence on the resistance values of tiles of said tiling,

wherein the resistance value of a given tile represents costs associated with routes connecting vertices of said graph located on a boundary of said given tile, and a lower bound for costs associated with said routes connecting vertices located on the boundary of said given tile is derived using said resistance value of said given tile.

24. A method for pre-processing road network data,
comprising the steps of

- defining a tiling (T) covering an area wherein at least a portion of said road network is contained,
- for tiles ($T_0$) of said tiling, determining vertices ($tbv_1$-$tbv_4$) located on a boundary of each respective tile,
- determining a lower bound for costs associated with an optimum route (11, 13) connecting any pair of said vertices ($tbv_1$-$tbv_4$) located on the boundary of said tile divided by an air-line distance of said pair of vertices, and
- outputting said determined lower bound.

25. The method according to claim 24,
**characterized in that**
said lower bound is determined from a minimum of the costs associated with a route connecting an arbitrary pair of vertices ($tbv_1$-$tbv_4$) located on the boundary of said tile divided by the air-line distance of said pair of vertices.

26. The method according to claim 24 or 25,
**characterized in that**
said determined lower bound is discretized prior to outputting.

27. A system for determining a route from a starting point to a destination on a road network,
which system employs an estimation function for a plurality of vertices of said road network, the estimation function providing a lower bound for costs associated with routes connecting a vertex of said road network and said destination, the system comprising

- a first storage unit (3) containing road network data,
- a second storage unit (4) containing tiling definition data defining a tiling and a resistance value for each tile, and
- a processing unit (2) adapted to determine an estimation function value for a tile boundary vertex located on a tile boundary in dependence on said resistance values of the tiles of said tiling,

wherein the resistance value of a given tile, contained in said second storage unit (4), represents costs associated with routes connecting vertices of said road network located on a boundary of said given tile, the processing unit (2) being adapted to derive a lower bound for costs associated with said routes connecting vertices located on the boundary of said given tile using said resistance value of said given tile.

28. The system according to claim 27,
**characterized in that**
said resistance value of said given tile (To), contained in said second storage unit (4), is a lower bound for costs associated with an optimum route (11, 13) connecting a pair of vertices ($tbv_1$-$tbv_4$) located on the boundary of said given tile relative to an air-line distance (12, 14) of said pair of vertices, the route traversing said given tile.

29. The system according to claim 27 or 28,
**characterized in that**
said resistance value of said given tile ($T_0$) contained in said second storage unit (4) is the minimum of the costs associated with an optimum route (11, 13) connecting any pair of vertices ($tbv_1$-$tbv_4$) located on the boundary of said given tile divided by the air-line distance (12, 14) of said pair of vertices, such that the product of said resistance value of said given tile and an air-line distance of any pair of test vertices located on the boundary of said given tile is a lower bound of costs associated with an optimum route connecting said pair of test vertices within said tile.

30. The system according to any one of claims 27 - 29,
**characterized in that**
said processing unit (2) is adapted to determine at least one destination tile boundary vertex (24, 25) located on a boundary of a destination tile ($T_3$) containing said destination (22) and to compute a lower bound for costs associated with an optimum route connecting said tile boundary vertex (23) and said at least one destination tile boundary vertex (24, 25), the lower bound being determined in dependence on said resistance values of the tiles of said tiling.

31. The system according to claim 30,

**characterized in that** said processing unit (2) is adapted to compute said lower bound employing Dijkstra's algorithm or an A*-algorithm having said destination tile boundary vertex (24, 25) as origin.

**32.** The system according to any one of claims 27 - 31,
   **characterized by**
   a memory unit (5) storing coordinates of said tile boundary vertex (23) and said estimation function value for said tile boundary vertex (23) determined by the processing unit (2).

**33.** The system according to claim 32,
   **characterized in that**
   the memory unit (5) stores said coordinates of said tile boundary vertex (23) in the form of a one-dimensional coordinate specifying a position of said tile boundary vertex along a line defined by the boundary of said tile.

**34.** The system according to any one of claims 27-33,
   **characterized in that**
   said processing unit (2) is adapted to receive a traffic message signal for a road segment of said road network and to change the resistance value of a tile containing said road segment in dependence on said received traffic message signal.

**35.** The system according to any one of claims 27 - 34,
   **characterized in that**
   said processing unit (2) is adapted to determine an optimum route from said starting point to said destination employing an A*-algorithm which uses estimation function values determined in dependence on the resistance values of tiles of said tiling and stored in said memory unit (5).

**36.** The system according to any one of claims 27 - 35,
   **characterized in that**
   said system is adapted to perform the method according to any one of claims 1 - 23.

**37.** A navigation system,
   comprising

   - input means (6) for inputting a destination,
   - output means (7) for outputting a determined route, and
   - the system (2-5) for determining a route according to any one of claims 27
   - 36, the system being coupled to the input means (6) for receiving said destination therefrom and to the output means (7) for outputting a determined route thereto.

**38.** The navigation system according to claim 37,
   comprising

   - position determining means (8) for determining a current vehicle position, the position determining means (8) being coupled to said system (2-5) for determining a route, for providing the current vehicle position as said starting point.

**39.** The navigation system according to claim 38,
   **characterized in that**
   said position determining means (8) comprises a GPS-receiver.

**40.** The navigation system according to any one of claims 37 - 39,
   **characterized by**

   - a TMC-receiver (9) coupled to said processing unit (2) for providing a traffic message signal thereto.

**Patentansprüche**

**1.** Verfahren zum Bestimmen einer Route von einem Startpunkt zu einem Ziel auf einem Straßennetz,

wobei das Verfahren eine Schätzfunktion für eine Mehrzahl von Knoten des Straßennetzes verwendet, wobei die Schätzfunktion eine untere Schranke für Kosten bereitstellt, die einer Route zugeordnet sind, die einen Knoten des Straßennetzes und das Ziel verbindet,
wobei das Verfahren die Schritte umfasst:

- Definieren einer Kachelung (T), die einen Bereich bedeckt, in dem wenigstens ein Teil des Straßennetzes enthalten ist,
- Bereitstellen eines Widerstandswerts jeder Kachel der Kachelung und
- Bestimmen eines Schätzfunktionswerts für einen auf einem Kachelrand angeordneten Kachelrand-Knoten (23) abhängig von den Widerstandswerten von Kacheln der Kachelung,

wobei der Widerstandswert einer gegebenen Kachel Kosten repräsentiert, welche Routen zugeordnet sind, die auf einem Rand der gegebenen Kachel angeordnete Knoten des Straßennetzes verbinden, und wobei eine untere Schranke für Kosten, welche den Routen zugeordnet sind, die auf dem Rand der gegebenen Kachel angeordnete Knoten verbinden, unter Verwendung des Widerstandswerts der gegebenen Kachel hergeleitet wird.

2. Verfahren nach Anspruch 1,
**dadurch gekennzeichnet,**
**dass** der Widerstandswert der gegebenen Kachel ($T_0$) Kosten, welche Routen (11, 13) zugeordnet sind, die auf dem Rand der gegebenen Kachel angeordnete Knoten ($tbv_1$-$tbv_4$) verbinden, in Beziehung zu einer geometrischen Eigenschaft des Straßennetzes in der gegebenen Kachel repräsentiert.

3. Verfahren nach Anspruch 1 oder 2,
**dadurch gekennzeichnet,**
**dass** der Widerstandswert der gegebenen Kachel ($T_0$) eine untere Schranke für die Kosten, welche einer optimalen Route (11, 13) zugeordnet sind, die ein Paar von auf dem Rand der gegebenen Kachel angeordneten Knoten ($tbv_1$-$tbv_4$) verbindet, relativ zu einem Luftlinienabstand (12, 14) des Paars von Knoten ist, wobei die Route durch die gegebene Kachel läuft.

4. Verfahren nach Anspruch 3,
**dadurch gekennzeichnet,**
**dass** der Widerstandswert der gegebenen Kachel ($T_0$) das Minimum der Kosten, welche einer optimalen Route (11, 13) zugeordnet sind, die ein beliebiges Paar von auf dem Rand der gegebenen Kachel angeordneten Knoten ($tbv_1$-$tbv_4$) verbindet, geteilt durch den Luftlinienabstand (12, 14) des Paars von Knoten ist, so dass das Produkt aus dem Widerstandswert der gegebenen Kachel und einem Luftlinienabstand eines beliebigen Paars von auf dem Rand der gegebenen Kachel angeordneten Testknoten eine untere Schranke für Kosten ist, welche einer optimalen Route zugeordnet sind, die das Paar von Testknoten in der gegebenen Kachel verbindet.

5. Verfahren nach einem der vorhergehenden Ansprüche,
**dadurch gekennzeichnet,**
**dass** der Schritt des Bestimmens des Schätzfunktionswerts für den Kachelrand-Knoten (23) die Schritte umfasst:

- Bestimmen einer Zielkachel ($T_3$), die das Ziel (22) enthält, und
- Bestimmen einer ersten unteren Schranke für Kosten, welche einer optimalen Route zugeordnet sind, die wenigstens einen auf einem Rand der Zielkachel ($T_3$) angeordneten Zielkachelrand-Knoten (24, 25) und den Kachelrand-Knoten (23) verbindet.

6. Verfahren nach Anspruch 5,
**dadurch gekennzeichnet,**
**dass** die erste untere Schranke abhängig von dem Widerstandswert einer Kachel oder abhängig von den Widerstandswerten einer Mehrzahl von Kacheln der Kachelung bestimmt wird.

7. Verfahren nach Anspruch 6,
**dadurch gekennzeichnet,**
**dass** die erste untere Schranke unter Verwendung eines Dijkstra-Algorithmus oder eines A*-Algorithmus für einen Teilgraphen des Straßennetzes, der nur auf Kachelrändern angeordnete Knoten (23-25) umfasst, bestimmt wird.

8. Verfahren nach Anspruch 7,

**dadurch gekennzeichnet,**

**dass** Kosten, welche einer Teilgraph-Kante (26a) zugeordnet sind, die auf einem Rand einer beliebigen Kachel ($T_2$) angeordnete erste und zweite Knoten (23, 24) verbindet, aus einem Widerstandswert der beliebigen Kachel und einem Luftlinienabstand der ersten und zweiten Knoten (23, 24) bestimmt werden.

9. Verfahren nach Anspruch 8,
   **dadurch gekennzeichnet,**
   **dass** die Kosten, welche der Teilgraph-Kante (26a) zugeordnet sind, gleich dem Widerstandswert der beliebigen Kachel ($T_2$) multipliziert mit dem Luftlinienabstand der ersten und zweiten Knoten (23, 24) gesetzt werden.

10. Verfahren nach einem der Ansprüche 5 bis 9,
    **dadurch gekennzeichnet,**
    **dass** der Schritt des Bestimmens des Schätzfunktionswerts für den Kachelrand-Knoten (23) weiterhin die Schritte umfasst:

    - Bestimmen einer zweiten unteren Schranke für Kosten, welche einer optimalen Route zugeordnet sind, die das Ziel (22) und den wenigstens einen Zielkachelrand-Knoten (24, 25) verbindet, und
    - Addieren der ersten unteren Schranke und der zweiten unteren Schranke.

11. Verfahren nach Anspruch 10,
    **dadurch gekennzeichnet,**
    **dass** der Schritt des Bestimmens des Schätzfunktionswerts für den Kachelrand-Knoten (23) weiterhin den Schritt umfasst:

    - Bestimmen eines Minimums einer Summe der ersten unteren Schranke und der zweiten unteren Schranke über alle Zielkachelrand-Knoten (24, 25).

12. Verfahren nach einem der vorhergehenden Ansprüche,
    **gekennzeichnet durch** den Schritt

    - Bestimmen eines Schätzfunktionswerts für einen im Inneren einer Kachel ($T_2$) angeordneten inneren Knoten (29) aus einem Schätzfunktionswert für einen auf dem Rand der Kachel ($T_2$) angeordneten Kachelrand-Knoten (23, 24) und einer unteren Schranke für Kosten, welche einer optimalen Route zugeordnet sind, die den inneren Knoten (29) und den Kachelrand-Knoten (23, 24) verbindet.

13. Verfahren nach Anspruch 12,
    **dadurch gekennzeichnet,**
    **dass** die untere Schranke für Kosten, welche einer optimalen Route zugeordnet sind, die den inneren Knoten (29) und den Kachelrand-Knoten (23, 24) verbindet, aus einem Luftlinienabstand (27, 28) des inneren Knotens (29) und des Kachelrand-Knotens (23, 24) bestimmt wird.

14. Verfahren nach Anspruch 12,
    **dadurch gekennzeichnet,**
    **dass** die untere Schranke für Kosten, welche einer optimalen Route zugeordnet sind, die den inneren Knoten (29) und den Kachelrand-Knoten (23, 24) verbindet, aus einem minimalen Luftlinienabstand (27', 28') des inneren Knotens von einer Kante der Kachel bestimmt wird, auf der der Kachelrand-Knoten (23, 24) angeordnet ist.

15. Verfahren nach einem der vorhergehenden Ansprüche,
    **gekennzeichnet durch** die Schritte:

    - Erfassen einer Zunahme eines Kostenfaktors eines Stra-ßensegments des Straßennetzes und
    - Erhöhen eines Widerstandswerts einer Kachel, die das Straßensegment enthält, abhängig von der erfassten Zunahme des Kostenfaktors.

16. Verfahren nach Anspruch 15,
    **dadurch gekennzeichnet,**
    **dass** das Erhöhen des Widerstandswerts der Kachel, die das Straßensegment enthält, multiplikativ ist.

**17.** Verfahren nach Anspruch 15 oder 16,
**dadurch gekennzeichnet,**
**dass** der Kostenfaktor des Straßensegments abhängig von einer Benutzereingabe erhöht wird.

**18.** Verfahren nach einem der Ansprüche 15 bis 17,
**gekennzeichnet durch** den Schritt

- automatisches Empfangen eines Verkehrsmeldungssignals, wobei der Kostenfaktor des Straßensegments abhängig von dem empfangenen Verkehrsmeldungssignal erhöht wird.

**19.** Verfahren nach einem der vorhergehenden Ansprüche,
**dadurch gekennzeichnet,**
**dass** eine Kachelgröße von Kacheln ($T_1'$, $T_2'$, $T_1''$-$T_6''$) der Kachelung (T) mit zunehmendem Abstand von dem Startpunkt und dem Ziel zunimmt.

**20.** Verfahren nach Anspruch 19,
**dadurch gekennzeichnet,**
**dass** ein erster Widerstandswert für jede Kachel einer ersten regulären Kachelung (T') bereitgestellt wird,
**dass** ein zweiter Widerstandswert für jede Kachel einer zweiten regulären Kachelung (T'') bereitgestellt wird, und
**dass** die Kachelung (T), welche den Bereich bedeckt, Kacheln ($T_1'$, $T_2'$) der ersten regulären Kachelung (T') und Kacheln ($T_1''$-$T_6''$) der zweiten regulären Kachelung (T'') umfasst, wobei die Widerstandswerte von Kacheln der Kachelung gleich den entsprechenden ersten bzw. zweiten Widerstandswerten sind.

**21.** Verfahren nach einem der vorhergehenden Ansprüche,
**dadurch gekennzeichnet,**
**dass** für jede Kachel der Kachelung (T) ein erster Basis-Widerstandswert und ein zweiter Basis-Widerstandswert bereitgestellt werden, welche ein erstes bzw. zweites Basis-Kostenmodell repräsentieren, wobei für ein Kostenmodell, welches als eine Linearkombination der ersten und zweiten Basis-Kostenmodelle gebildet wird, eine untere Schranke für den Widerstandswert durch eine Linearkombination der ersten und zweiten Basis-Widerstandswerte bestimmt wird.

**22.** Verfahren nach einem der vorhergehenden Ansprüche,
**dadurch gekennzeichnet,**
**dass** eine optimale Route von dem Startpunkt zu dem Ziel unter Verwendung eines A*-Algorithmus bestimmt wird, der die in Abhängigkeit von den Widerstandswerten von Kacheln der Kachelung bestimmte Schätzfunktion verwendet.

**23.** Verfahren zum Bestimmen einer Route von einem Startpunkt zu einem Ziel auf einem Graphen, wobei das Verfahren eine Schätzfunktion für eine Mehrzahl von Knoten des Graphen verwendet, wobei die Schätzfunktion eine untere Schranke für Kosten bereitstellt, die einer Route zugeordnet sind, die einen Knoten des Graphen und das Ziel verbindet,
wobei das Verfahren die Schritte umfasst:

- Definieren einer Kachelung (T), die einen Bereich bedeckt, in dem wenigstens ein Teil des Graphen enthalten ist,
- Bereistellen eines Widerstandswerts jeder Kachel der Kachelung und
- Bestimmen eines Schätzfunktionswerts für einen auf einem Kachelrand angeordneten Kachelrand-Knoten (23) abhängig von den Widerstandswerten von Kacheln der Kachelung,

wobei der Widerstandswert einer gegebenen Kachel Kosten repräsentiert, welche Routen zugeordnet sind, die auf einem Rand der gegebenen Kachel angeordnete Knoten des Graphen verbinden, und wobei eine untere Schranke für Kosten, welche den Routen zugeordnet sind, die auf dem Rand der gegebenen Kachel angeordnete Knoten verbinden, unter Verwendung des Widerstandswerts der gegebenen Kachel hergeleitet wird.

**24.** Verfahren zum Vorverarbeiten von Straßennetzdaten, welches die Schritte umfasst:

- Definieren einer Kachelung (T), die einen Bereich bedeckt, in dem wenigstens ein Teil des Straßennetzes enthalten ist,

- Bestimmen von Knoten ($tbv_1$-$tbv_4$), die auf einem Rand der jeweiligen Kachel angeordnet sind, für Kacheln ($T_0$) der Kachelung,
- Bestimmen einer unteren Schranke für Kosten, welche einer optimalen Route (11, 13) zugeordnet sind, die ein Paar der auf dem Rand der Kachel angeordneten Knoten ($tbv_1$-$tbv_4$) verbindet, geteilt durch einen Luftlinienabstand des Paars von Knoten, und

Ausgeben der bestimmten unteren Schranke.

**25.** Verfahren nach Anspruch 24,
**dadurch gekennzeichnet,**
**dass** die untere Schranke aus einem Minimum der Kosten, welche einer Route zugeordnet sind, die ein beliebiges Paar von auf dem Rand der Kachel angeordneten Knoten ($tbv_1$-$tbv_4$) verbindet, geteilt durch den Luftlinienabstand des Paars von Knoten bestimmt wird.

**26.** Verfahren nach Anspruch 24 oder 25,
**dadurch gekennzeichnet,**
**dass** die bestimmte untere Schranke vor dem Ausgeben diskretisiert wird.

**27.** System zum Bestimmen einer Route von einem Startpunkt zu einem Ziel auf einem Straßennetz,
wobei das System eine Schätzfunktion für eine Mehrzahl von Knoten des Straßennetzes verwendet, wobei die Schätzfunktion eine untere Schranke für Kosten bereitstellt, welche Routen zugeordnet sind, die einen Knoten des Straßennetzes und das Ziel verbinden,
wobei das System umfasst:

   - eine erste Speichereinheit (3), die Straßennetzdaten enthält,
   - eine zweite Speichereinheit (4), die eine Kachelung definierende Kachelungsdefinitionsdaten und einen Widerstandswert für jede Kachel enthält, und
   - eine Verarbeitungseinheit (2), die eingerichtet ist, um einen Schätzfunktionswert für einen auf einem Kachelrand angeordneten Kachelrand-Knoten abhängig von den Widerstandswerten der Kacheln der Kachelung zu bestimmen,

wobei der in der zweiten Speichereinheit (4) enthaltene Widerstandswert einer gegebenen Kachel Kosten repräsentiert, welche Routen zugeordnet sind, die auf einem Rand der gegebenen Kachel angeordnete Knoten des Straßennetzes verbinden,
wobei die Verarbeitungseinheit (2) eingerichtet ist, um eine untere Schranke für Kosten, welche den Routen zugeordnet sind, die auf dem Rand der gegebenen Kachel angeordnete Knoten verbinden, unter Verwendung des Widerstandswerts der gegebenen Kachel herzuleiten.

**28.** System nach Anspruch 27,
**dadurch gekennzeichnet,**
**dass** der in der zweiten Speichereinheit (4) enthaltene Widerstandswert der gegebenen Kachel ($T_0$) eine untere Schranke für Kosten, welche einer optimalen Route (11, 13) zugeordnet sind, die ein Paar von auf dem Rand der gegebenen Kachel angeordneten Knoten ($tbv_1$-$tbv_4$) verbindet, relativ zu einem Luftlinienabstand (12, 14) des Paars von Knoten ist, wobei die Route durch die gegebene Kachel läuft.

**29.** System nach Anspruch 27 oder 28,
**dadurch gekennzeichnet,**
**dass** der in der zweiten Speichereinheit (4) enthaltene Widerstandswert der gegebenen Kachel ($T_0$) das Minimum der Kosten, die einer optimalen Route (11, 13) zugeordnet sind, die ein beliebiges Paar von auf dem Rand der gegebenen Kachel angeordneten Knoten ($tbv_1$-$tbv_4$) verbindet, geteilt durch den Luftlinienabstand (12, 14) des Paars von Knoten ist, so dass das Produkt aus dem Widerstandswert der gegebenen Kachel und einem Luftlinienabstand eines beliebigen Paars von auf dem Rand der gegebenen Kachel angeordneten Testknoten eine untere Schranke für Kosten ist, welche einer optimalen Route zugeordnet sind, die das Paar von Testknoten in der Kachel verbindet.

**30.** System nach einem der Ansprüche 27 bis 29,
**dadurch gekennzeichnet,**
**dass** die Verarbeitungseinheit (2) eingerichtet ist, um wenigstens einen auf einem Rand einer das Ziel (22) enthal-

tenden Zielkachel (T$_3$) angeordneten Zielkachelrand-Knoten (24, 25) zu bestimmen und um eine untere Schranke für Kosten zu berechnen, welche einer optimalen Route zugeordnet sind, die den Kachelrand-Knoten (23) und den wenigstens einen Zielkachelrand-Knoten (24, 25) verbindet, wobei die untere Schranke abhängig von den Widerstandswerten der Kacheln der Kachelung bestimmt wird.

**31.** System nach Anspruch 30,
**dadurch gekennzeichnet,**
**dass** die Verarbeitungseinheit (2) eingerichtet ist, um die untere Schranke unter Verwendung eines Dijkstra-Algorithmus oder eines A*-Algorithmus zu berechnen, der den Zielkachelrand- Knoten (24, 25) als Ursprung hat.

**32.** System nach einem der Ansprüche 27 bis 31,
**gekennzeichnet durch**
eine Speichereinheit (5), welche Koordinaten des Kachelrand-Knotens (23) und den von der Verarbeitungseinheit (2) bestimmten Schätzfunktionswert für den Kachelrand-Knoten (23) speichert.

**33.** System nach Anspruch 32,
**dadurch gekennzeichnet,**
**dass** die Speichereinheit (5) die Koordinaten des Kachelrand-Knotens (23) in der Form einer eindimensionalen Koordinate speichert, die eine Position des Kachelrand-Knotens entlang einer durch den Rand der Kachel definierten Linie angibt.

**34.** System nach einem der Ansprüche 27 bis 33,
**dadurch gekennzeichnet,**
**dass** die Verarbeitungseinheit (2) eingerichtet ist, um ein Verkehrsmeldungssignal für ein Straßensegment des Straßennetzes zu empfangen und um den Widerstandswert einer das Straßensegment enthaltenden Kachel abhängig von dem empfangenen Verkehrsmeldungssignal zu ändern.

**35.** System nach einem der Ansprüche 27 bis 34,
**dadurch gekennzeichnet,**
**dass** die Verarbeitungseinheit (2) eingerichtet ist, um eine optimale Route von dem Startpunkt zu dem Ziel unter Verwendung eines A*-Algorithmus zu bestimmen, der Schätzfunktionswerte verwendet, die in Abhängigkeit von den Widerstandswerten von Kacheln der Kachelung bestimmt wurden und in der Speichereinheit (5) gespeichert sind.

**36.** System nach einem der Ansprüche 27 bis 35,
**dadurch gekennzeichnet,**
**dass** das System eingerichtet ist, um das Verfahren nach einem der Ansprüche 1 bis 23 durchzuführen.

**37.** Navigationssystem,
umfassend

- Eingabemittel (6) zum Eingeben eines Ziels,
- Ausgabemittel (7) zum Ausgeben einer bestimmten Route und
- das System (2-5) zum Bestimmen einer Route nach einem der Ansprüche 27 bis 36, wobei das System mit den Eingabemitteln (6) gekoppelt ist, um von diesen das Ziel zu empfangen, und wobei das System mit den Ausgabemitteln (7) gekoppelt ist, um eine bestimmte Route an diese auszugeben.

**38.** Navigationssystem nach Anspruch 37,
umfassend
Positionsbestimmungsmittel (8) zum Bestimmen einer momentanen Fahrzeugposition, wobei die Positionsbestimmungsmittel (8) mit dem System (2-5) zum Bestimmen einer Route gekoppelt sind, um die momentane Fahrzeugposition als den Startpunkt bereitzustellen.

**39.** Navigationssystem nach Anspruch 38,
**dadurch gekennzeichnet,**
**dass** die Positionsbestimmungsmittel (8) einen GPS-Empfänger umfassen.

**40.** Navigationssystem nach einem der Ansprüche 37 bis 39,

**gekennzeichnet durch**
einen TMC-Empfänger (9), der mit der Verarbeitungseinheit (2) gekoppelt ist, um ein Verkehrsmeldungssignal an diese bereitzustellen.

**Revendications**

1. Procédé de détermination d'un itinéraire à partir d'un point de départ vers un lieu de destination dans un réseau routier, le procédé utilisant une fonction d'estimation pour une pluralité de noeuds dudit réseau routier, la fonction d'estimation fournissant une limite inférieure pour des coûts associés à un itinéraire quelconque reliant un noeud dudit réseau routier et ledit lieu de destination,
le procédé comprenant les étapes de

   - définition d'un pavage (T) couvrant une zone contenant au moins une portion dudit réseau routier,
   - de fourniture d'une valeur de résistance de chaque pavé dudit pavage, et
   - la détermination d'une valeur de fonction d'estimation pour un noeud de bordure de pavé (23) disposé sur une bordure de pavé en fonction des valeurs de résistance de pavés dudit pavage,

   la valeur de résistance d'un pavé donné représentant des coûts associés à des itinéraires reliant des noeuds dudit réseau routier disposés sur une bordure dudit pavé donné, et une limite inférieure de coûts associés auxdits itinéraires reliant des noeuds disposés sur la bordure dudit pavé donné étant dérivée en utilisant ladite valeur de résistance dudit pavé donné.

2. Procédé selon la revendication 1, **caractérisé en ce que** ladite valeur de résistance dudit pavé donné ($T_0$) représente des coûts associés aux itinéraires (11, 13) reliant des noeuds ($tbv_1$-$tbv_4$) disposés sur la bordure dudit pavé donné en relation avec une caractéristique géométrique dudit réseau routier dans ledit pavé donné.

3. Procédé selon la revendication 1 ou 2, **caractérisé en ce que** ladite valeur de résistance dudit pavé donné ($T_0$) est une limite inférieure des coûts associés à un itinéraire optimal (11, 13) reliant une paire de noeuds ($tbv_1$-$tbv_4$) disposés sur la bordure dudit pavé donné relativement à une distance à vol d'oiseau (12, 14) de ladite paire de noeuds, l'itinéraire traversant ledit pavé donné.

4. Procédé selon la revendication 3, **caractérisé en ce que** ladite valeur de résistance dudit pavé donné ($T_0$) est le minimum des coûts associés à un itinéraire optimal (11, 13) reliant une paire quelconque de noeuds ($tbv_1$-$tbv_4$) disposés sur la bordure dudit pavé donné divisé par la distance à vol d'oiseau (12, 14) de ladite paire de noeuds, tel que le produit de ladite valeur de résistance dudit pavé donné par une distance à vol d'oiseau d'une paire quelconque de noeuds de test disposés sur la bordure dudit pavé donné est une limite inférieure de coûts associés à un itinéraire optimal reliant ladite paire de noeuds de test à l'intérieur dudit pavé donné.

5. Procédé selon l'une quelconque des revendications précédentes, **caractérisé en ce que** l'étape de détermination de ladite valeur de fonction d'estimation pour ledit noeud (23) de bordure de pavé comprend les étapes de

   - détermination d'un pavé de destination ($T_3$) contenant ledit lieu de destination (22), et
   - détermination d'une première limite inférieure de coûts associés à un itinéraire optimal reliant au moins un noeuds de bordure de pavé de destination (24, 25) disposé sur une bordure dudit pavé de destination ($T_3$) et ledit noeud de bordure de pavé (23).

6. Procédé selon la revendication 5, **caractérisé en ce que** ladite première limite inférieure est déterminée en fonction de la valeur de résistance d'un pavé ou en fonction des valeurs de résistance d'une pluralité de pavés dudit pavage.

7. Procédé selon la revendication 6, **caractérisé en ce que** ladite première limite inférieure est déterminée en utilisant l'algorithme de Dijkstra ou un algorithme A* pour un sous-graphe dudit réseau routier comprenant des noeuds (23-25) disposés uniquement sur des bordures de pavé.

8. Procédé selon la revendication 7, **caractérisé en ce que** les coûts associés à une arête de sous-graphe (26a) reliant des premiers et deuxièmes noeuds (23, 24) disposés sur une bordure d'un pavé arbitraire ($T_2$) sont déterminés à partir d'une valeur de résistance dudit pavé arbitraire et d'une distance à vol d'oiseau desdits premier et deuxième noeuds (23, 24).

**9.** Procédé selon la revendication 8, **caractérisé en ce que** lesdits coûts associés à ladite arête de sous-graphe (26a) sont fixés égales à la valeur de résistance dudit pavé arbitraire (T2) multipliée par la distance à vol d'oiseau desdits premier et deuxième noeuds (23, 24).

**10.** Procédé selon l'une quelconque des revendications 5 à 9, **caractérisé en ce que** l'étape de détermination de ladite valeur de fonction d'estimation pour ledit noeud (23) de bordure de pavé comprend en outre les étapes

    - de détermination d'une deuxième limite inférieure des coûts associés à un itinéraire optimal reliant ledit lieu de destination (22) et ledit au moins un noeud de bordure de pavé de destination (24, 25), et
    - d'addition de ladite première limite inférieure et de ladite deuxième limite inférieure.

**11.** Procédé selon la revendication 10, **caractérisé en ce que** l'étape de détermination de ladite valeur de fonction d'estimation pour ledit noeud (23) de bordure de pavé comprend en outre l'étape de

    - détermination d'un minimum d'une somme de l'ensemble de noeuds de bordure de pavé de destination (24, 25) de ladite première limite inférieure et de ladite deuxième limite inférieure.

**12.** Procédé selon l'une quelconque des revendications précédentes, **caractérisé par** l'étape de

    - détermination d'une valeur de fonction d'estimation pour un noeud intérieur (29) disposé à l'intérieur d'un pavé ($T_2$) à partir d'une valeur de fonction d'estimation pour un noeud (23, 24) de bordure de pavé disposé sur la bordure dudit pavé ($T_2$) et d'une limite inférieure de coûts associés à un itinéraire optimal reliant ledit noeud intérieur (29) et ledit noeud (23, 24) de bordure de pavé.

**13.** Procédé selon la revendication 12, **caractérisé en ce que** ladite limite inférieure de coûts associés à un itinéraire optimal reliant ledit noeud intérieur (29) et ledit noeud (23, 24) de bordure de pavé est déterminée à partir d'une distance à vol d'oiseau (27, 28) entre ledit noeud intérieur (29) et ledit noeud (23, 24) de bordure de pavé.

**14.** Procédé selon la revendication 12, **caractérisé en ce que** ladite limite inférieure de coûts associés à un itinéraire optimal reliant ledit noeud intérieur (29) et ledit noeud (23, 24) de bordure de pavé est déterminée à partir d'une distance à vol d'oiseau minimale (27', 28') entre ledit noeud intérieur et une arête dudit pavé sur laquelle est disposé ledit noeud (23, 24) de bordure de pavé.

**15.** Procédé selon l'une quelconque des revendications précédentes, **caractérisé par** les étapes

    - de détection d'une augmentation d'un facteur de coûts d'un segment de route dudit réseau routier, et
    - d'augmentation d'une valeur de résistance d'un pavé contenant ledit segment de route en fonction de ladite augmentation du facteur de coûts détectée.

**16.** Procédé selon la revendication 15, **caractérisé en ce que** ladite augmentation de la valeur de résistance dudit pavé contenant ledit segment de route est multiplicative.

**17.** Procédé selon la revendication 15 ou 16, **caractérisé en ce que** ledit facteur de coûts dudit segment de route est augmenté en fonction d'une saisie utilisateur.

**18.** Procédé l'une quelconque des revendications 15 à 17, **caractérisé par** l'étape de

    - réception automatique d'un signal de message de radioguidage, ledit facteur de coûts dudit segment de route étant augmenté en fonction du signal de message de radioguidage reçu.

**19.** Procédé selon l'une quelconque des revendications précédentes, **caractérisé en ce qu'**une taille de pavé de pavés ($T_1'$, $T_2'$, $T_1''$-$T_6''$) dudit pavage (T) augmente avec l'augmentation de la distance entre le point de départ et ledit lieu de destination.

**20.** Procédé selon la revendication 19, **caractérisé en ce que**

    - une première valeur de résistance est fournie pour chaque pavé d'un premier pavage régulier (T'),
    - une deuxième valeur de résistance est fournie pour chaque pavé d'un deuxième pavage régulier (T''), et

- ledit pavage (T) couvrant ladite zone comprend des pavés [$T_1'$, $T_2'$] dudit premier pavage régulier (T') et des pavés ($T_1''$- $T_6''$) dudit deuxième pavage régulier (T''), les valeurs de résistance de pavés dudit pavage étant égales respectivement auxdites première et deuxième valeurs de résistance correspondantes.

21. Procédé selon l'une quelconque des revendications précédentes, **caractérisé en ce que**, pour chaque pavé dudit pavage (T), on fournit une première valeur de résistance de base et une deuxième valeur de résistance de base qui représentent respectivement des premier et deuxième modèles de coûts de base, dans lequel, pour un modèle de coûts formé comme une combinaison linéaire des premier et deuxième modèles de coûts de base, une limite inférieure de la valeur de résistance est déterminée par une combinaison linéaire des première et deuxième valeurs de résistance de base.

22. Procédé selon l'une quelconque des revendications précédentes, **caractérisé en ce qu'**un itinéraire optimal à partir dudit point de départ vers ledit lieu de destination est déterminé en employant un algorithme A* qui utilise la fonction d'estimation déterminée en fonction des valeurs de résistance de pavés dudit pavage.

23. Procédé de détermination d'un itinéraire à partir d'un point de départ vers un lieu de destination sur un graphe, le procédé employant une fonction d'estimation pour une pluralité de noeuds dudit graphe, la fonction d'estimation fournissant une limite inférieure de coûts associés à un itinéraire quelconque reliant un noeud dudit graphe et ledit lieu de destination, le procédé comprenant les étapes de

   - définition d'un pavage (T) couvrant une zone contenant au moins une portion dudit graphe,
   - fourniture d'une valeur de résistance de chaque pavé dudit pavage, et
   - détermination d'une valeur de fonction d'estimation pour un noeud (23) de bordure de pavé disposé sur une bordure de pavé en fonction des valeurs de résistance de pavés dudit pavage,

   la valeur de résistance d'un pavé donné représentant des coûts associés à des itinéraires reliant des noeuds dudit graphe disposés sur une bordure dudit pavé donné, et une limite inférieure de coûts associés auxdits itinéraires reliant des noeuds disposés sur la bordure dudit pavé donné étant dérivée en utilisant ladite valeur de résistance dudit pavé donné.

24. Procédé de prétraitement de données de réseau routier, comprenant les étapes de

   - définition d'un pavage (T) couvrant une zone contenant au moins une portion dudit réseau routier,
   - détermination, pour des pavés ($T_0$) dudit pavage, de noeuds ($tbv_1$-$tbv_4$) disposés sur une bordure de chaque pavé respectif,
   - détermination d'une limite inférieure de coûts associés à un itinéraire optimal (11, 13) reliant une paire quelconque desdits noeuds ($tbv_1$-$tbv_4$) disposés sur la bordure dudit pavé divisé par une distance à vol d'oiseau de ladite paire de noeud, et
   - d'émission de ladite limite inférieure déterminée.

25. Procédé selon la revendication 24, **caractérisé en ce que** ladite limite inférieure est déterminée à partir d'un minimum des coûts associés à un itinéraire reliant une paire arbitraire de noeuds ($tbv_1$-$tbv_4$) disposés sur la bordure dudit pavé divisé par la distance à vol d'oiseau de ladite paire de noeud.

26. Procédé selon la revendication 24 ou 25, **caractérisé en ce que** ladite limite inférieure déterminée est discrétisée antérieurement à l'émission.

27. Système de détermination d'un itinéraire à partir d'un point de départ vers un lieu de destination sur un réseau routier, le système employant une fonction d'estimation pour une pluralité de noeuds dudit réseau routier, la fonction d'estimation fournissant une limite inférieure de coûts associés à des itinéraires reliant un noeud dudit réseau routier et ledit lieu de destination, le système comprenant

   - une première unité de mémoire (3) contenant des données de réseau routier,
   - une deuxième unité de mémoire (4) contenant des données de définition de pavage définissant un pavage et une valeur de résistance pour chaque pavé, et
   - une unité de traitement (2) adaptée à déterminer une valeur de fonction d'estimation pour un noeud de bordure de pavé disposé sur une bordure de pavé en fonction desdite valeurs de résistance des pavés dudit pavage,

la valeur de résistance d'un pavé donné, contenue dans ladite deuxième unité de mémoire (4), représentant des coûts associés à des itinéraires reliant des noeud dudit réseau routier disposés sur une bordure dudit pavé donné, l'unité de traitement (2) étant adaptée à dériver une limite inférieure de coûts associés auxdits itinéraires reliant des noeuds disposés sur la bordure dudit pavé donné en utilisant ladite valeur de résistance dudit pavé donné.

28. Système selon la revendication 27, **caractérisé en ce que** ladite valeur de résistance dudit pavé donné ($T_0$) contenue dans ladite deuxième unité de mémoire (4) est une limite inférieure de coûts associés à un itinéraire optimal (11, 13) reliant une paire de noeuds ($tbv_1$-$tbv_4$) disposés sur la bordure dudit pavé donné relativement à une distance à vol d'oiseau (12, 14) de ladite paire de noeud, l'itinéraire traversant ledit pavé donné.

29. Système selon la revendication 27 ou 28, **caractérisé en ce que** ladite valeur de résistance dudit pavé donné ($T_0$) contenue dans ladite deuxième unité de mémoire (4) est le minimum des coûts associés à un itinéraire optimal (11, 13) reliant une paire quelconque de noeuds ($tbv_1$-$tbv_4$) disposés sur la bordure dudit pavé donné divisé par la distance à vol d'oiseau (12, 14) de ladite paire de noeud, tel que le produit de ladite valeur de résistance dudit pavé donné par une distance à vol d'oiseau d'une paire quelconque de noeud de test disposés sur la bordure dudit pavé donné est une limite inférieure de coûts associés à un itinéraire optimal reliant ladite paire de noeuds de test à l'intérieur dudit pavé.

30. Système selon l'une quelconque des revendications 27 à 29, **caractérisé en ce que** ladite unité de traitement (2) est adaptée à déterminer au moins un noeud (24, 25) de bordure de pavé de destination disposé sur une bordure d'un pavé de destination ($T_3$) contenant ledit lieu de destination (22), et à calculer une limite inférieure de coûts associés à un itinéraire optimal reliant ledit noeud (23) de bordure de pavé et ledit au moins un noeud (24, 25) de bordure de pavé de destination, la limite inférieure étant déterminée en fonction desdites valeurs de résistance des pavés dudit pavage.

31. Système selon la revendication 30, **caractérisé en ce que** ladite unité de traitement (2) est adaptée à calculer ladite limite inférieure en employant l'algorithme de Dijkstra ou un algorithme A* ayant comme origine ledit noeud (24, 25) de bordure de pavé de destination.

32. Système selon l'une quelconque des revendications 27 à 31, **caractérisé par** une unité de mémoire (5) mémorisant des coordonnées dudit noeud (23) de bordure de pavé et ladite valeur de fonction d'estimation pour ledit noeud (23) de bordure de pavé déterminée par l'unité de traitement (2).

33. Système selon la revendication 32, **caractérisé en ce que** l'unité de mémoire (5) mémorise lesdites coordonnées dudit noeud (23) de bordure de pavé sous forme d'une coordonnée unidimensionnelle spécifiant une position dudit noeud de bordure de pavé le long d'une ligne définie par la bordure dudit pavé.

34. Système selon l'une quelconque des revendications 27 à 33, **caractérisé en ce que** ladite unité de traitement (2) est adaptée pour recevoir un signal de message de radioguidage pour un segment de route dudit réseau routier et pour changer la valeur de résistance d'un pavé contenant ledit segment de route en fonction dudit signal de message de radioguidage.

35. Système selon l'une quelconque des revendications 27 à 34, **caractérisé en ce que** ladite unité de traitement (2) est adaptée pour déterminer un itinéraire optimal à partir dudit point de départ vers ledit lieu de destination en employant un algorithme A* qui utilise des valeurs de fonction d'estimation déterminées en fonction des valeurs de résistance de pavés dudit pavage et mémorisées dans ladite unité de mémoire (5).

36. Système selon l'une quelconque des revendications 27 à 35, **caractérisé en ce que** ledit système est adapté pour exécuter le procédé selon l'une quelconque des revendications 1 à 23.

37. Système de navigation, comprenant

  - des moyens d'entrée (6) pour entrer un lieu de destination,
  - des moyens de sortie (7) pour sortir un itinéraire déterminé, et
  - le système (2-5) pour déterminer un itinéraire selon l'une quelconque des revendications 27 à 36, le système étant couplé aux moyens d'entrée (6) pour en recevoir le lieu de destination et aux moyens de sortie (7) pour sortir un itinéraire déterminé vers eux.

**38.** Système de navigation selon la revendication 37, comprenant

- un moyen de détermination de position (8) pour déterminer une position actuelle de véhicule, le moyen de détermination de position (8) étant couplé audit système (2-5) en vue de déterminer un itinéraire, pour fournir la position actuelle du véhicule en tant que point de départ.

**39.** Système de navigation selon la revendication 38, **caractérisé en ce que** ledit moyen de détermination de position (8) comprend un récepteur GPS.

**40.** Système de navigation selon l'une quelconque des revendications 37 à 39, **caractérisé par**

- un récepteur TMC (9) couplé à ladite unité de traitement (2) pour lui fournir un signal de message de radio-guidage.

EP 1 867 952 B1

FIG. 1

6 8 7 9

5 4 3 2

1

4c
4b
4a

FIG. 2 A

FIG. 2 B

EP 1 867 952 B1

**FIG. 3**

FIG. 4

FIG. 5

30

31

RECEIVE STARTING POINT AND DESTINATION

32

DEFINE TILING T

33

DETERMINE ESTIMATION FUNCTION
FOR VERTICES OF ROAD NETWORK

36

PERFORM A* - ALGORITHM

37

OUTPUT OPTIMUM ROUTE

FIG. 6

33

34

DETERMINE ESTIMATION FUNCTION
FOR VERTICES ON TILE BOUNDARIES

35

DETERMINE ESTIMATION FUNCTION
FOR VERTICES IN TILE INTERIOR

FIG. 7

341 34

DETERMINE TILE $T_d$ CONTAINING DESTINATION d

342

DETERMINE VERTICES $dtbv_i$ LOCATED ON
THE BOUNDARY OF $T_d$

343

FOR EACH $dtbv_i$ , DETERMINE costs $(d; dtbv_i )$

344

DEFINE NEW GRAPH G' CONTAINING VERTICES
LOCATED ON TILE BOUNDARIES

345

PERFORM DIJKSTRA'S ALGORITHM STARTING
FROM EACH $dtbv_i$

346

SELECT A VERTEX $tbv_j$ LOCATED ON A
TILE BOUNDARY

347

DETERMINE $\min_{dtbv_i}$ [ $costs_{SG}(dtbv_i ; tbv_j )$ + costs $(d; dtbv_i )$]

348

STORE DETERMINED ESTIMATION
FUNCTION VALUE FOR $tbv_j$

ITERATE OVER ALL RELEVANT
VERTICES ON TILE BOUNDARIES

FIG. 8

35

SELECT A TILE $T_i$ — 351

DETERMINE ALL VERTICES $tbv_j$ LOCATED ON THE BOUNDARY OF $T_i$ — 352

SELECT A VERTEX $v_k$ IN THE INTERIOR OF $T_i$ — 353

FOR EACH $tbv_j$, DETERMINE costs ( $tbv_j$ ; $v_k$ ) — 354

DETERMINE
$min_{tbv_j}$ [ costs ($tbv_j$ ; $v_k$ ) + ESTIMATION FUNCTION ( $tbv_j$ )] — 355

STORE ESTIMATION FUNCTION FOR $v_k$ — 356

ITERATE OVER ALL $v_k$

SELECT NEW TILE $T_i$ — 357

ITERATE OVER ALL RELEVANT TILES $T_i$

FIG. 9

33'

DETERMINE ESTIMATION FUNCTION
FOR VERTICES ON TILE BOUNDARIES
34

DETERMINE ESTIMATION FUNCTION
FOR VERTICES LOCATED INSIDE
START TILE AND DESTINATION TILE
38

REDEFINE GRAPH
39

**FIG. 10**

**FIG. 11**

FIG. 12 A

EP 1 867 952 B1

FIG. 12 B

EP 1 867 952 B1

FIG. 12 C

42

40

41

RECEIVE TMC – SIGNAL OR USER INPUT

42

IDENTIFY AFFECTED ROAD SEGMENT(S)

43

IDENTIFY AFFECTED TILES

44

UPDATE COSTS OF AFFECTED ROAD SEGMENT(S)

45

UPDATE RESISTANCE VALUE(S)
OF AFFECTED TILE(S)

30

ROUTE DETERMINATION

FIG. 13

FIG. 14

FIG. 15A

**FIG. 15B**

60

**EP 1 867 952 B1**

**Patent documents cited in the description**

- WO 03079155 A
- US 6016485 A
- EP 1027578 A
- EP 05024414 A